# EUROPEAN PATENT SPECIFICATION

(11) **EP 4 626 718 B1**
(45) Date of publication and mention of the grant of the patent: **16.09.2026**
(21) Application number: 22823047.0
(22) Date of filing: 29.11.2022
(51) Int. Cl.: B60H 1/00, B60H 1/32

(54) **TRANSPORT REFRIGERATION SYSTEM**
TRANSPORTKÜHLSYSTEM
SYSTÈME DE RÉFRIGÉRATION DE TRANSPORT

(43) Date of publication of application: 08.10.2025
(73) Proprietor: BITZER Electronics A/S, 6400 Sønderborg (DK)
(72) Inventor: SØRENSEN, Kresten Kjær, 6440 Augustenborg (DK)
(74) Representative: Hoeger, Stellrecht & Partner Patentanwälte mbB
(86) International application number: PCT/EP2022/083722
(87) International publication number: WO 2024/114897

(56) References cited:
- EP-A1- 3 628 518
- EP-A1- 3 683 529
- WO-A1-2023/001525
- GB-A- 2 595 970

## Description

The invention refers to a transport refrigeration system, in particular for a storage unit, comprising a storage volume for temperature sensitive cargo, and a refrigerant circuit for cooling said storage volume, said refrigerant circuit comprising a compressor arrangement driven by an electric motor and an energy storage unit for supplying energy for operating said refrigerant circuit, wherein said transport refrigeration system during a travelling period is used for loading and delivering said cargo and during said travelling period said refrigerant circuit is powered by said energy storage unit in order to operate said refrigerant circuit for maintaining a setpoint temperature within said storage volume, wherein said transport refrigeration system during a rest period remains stationary in a charging location.

Such transport refrigeration systems are known from prior art.

A transport refrigeration system relevant for this invention is known from GB 2 595 970 A.

It is the object of the present invention on one hand to minimize the capacity of the energy storage unit and on the other hand to operate such a transport refrigeration system at minimum costs for the electric energy.

This object is solved by a transport refrigeration system according to claim 1 and a method according to claim 12, according to which in said charging location said refrigerant circuit is connected to and powered by a charger connected to a local electrical grid for precooling said storage volume to a setpoint temperature and for maintaining said setpoint temperature up to the end of the rest period and for charging said energy storage unit for the next travelling period and in that a controller determines the charge level of said energy storage unit and calculates the required recharge energy and further determines the temperature of the storage volume and calculates the required precooling energy and the required keep setpoint energy and in that said controller uses a given price correlation for the electric energy consumed within the remaining rest period for a price optimized timing of a recharge period for supplying the required recharge energy and timing a precooling period for supplying the required precooling energy and timing of a keep setpoint period for supplying the required keep setpoint energy.

The advantage of this solution has to be seen in the fact that on one hand the rest period is used for precooling the storage volume to a setpoint temperature and maintaining said setpoint temperature until the end of the rest period so that this energy has not to be stored in the energy storage unit and the energy storage unit has to be only dimensioned for running the refrigeration circuit in order to maintain the setpoint temperature during the travelling period comprising in addition to the transport of the cargo loading and unloading of said cargo.

According to the present invention the price time correlation can be any correlation presented by the supplier of the energy.

In particular the price time correlation defines a price for the energy consumed at the respective time within the rest period.

In order to optimize the consumption of energy and the price thereof it is necessary to calculate the precooling energy before precooling.

Therefore, the precooling energy is calculated by said controller according to the difference between an actual temperature detected within the storage volume and the given setpoint temperature for the upcoming travelling period which is usually defined beforehand and a precooling factor associated with said storage volume, said precooling factor in particular being dependent on the design of the storage volume.

Further, in order to optimize the precooling process it is of advantage to know the time necessary for precooling said storage volume starting with the actual temperature detected and ending up with the said point temperature.

For this reason the controller based on the calculated precooling energy and the power consumption of said refrigerant circuit when operated for precooling calculates the minimum duration of a virtual precooling period necessary for running said refrigerant circuit in order to achieve or end up at the setpoint temperature within said storage volume.

Thereafter the controller starts a process for finding a price optimized precooling period.

In order to achieve this, the controller arranges a plurality of said virtual precooling periods starting a different times within said rest period.

Such plurality of virtual precooling periods within said rest period comprises virtual precooling periods arranged in a time sequence within said rest period in which time sequence the plurality of virtual precooling periods can be arranged overlapping or non-overlapping in time.

In order to improve the optimization an overlapping arrangement of said virtual precooling periods is preferred.

Thereafter the virtual controller calculates the virtual precooling energy costs for each of the virtual precooling periods on the basis of the price defined by the price/time correlation for the respective virtual precooling periods.

After termination of each virtual precooling period the keep setpoint temperature at the end of each virtual precooling period has to be maintained until the end of the rest period.

For this reason the controller associates with each of the virtual precooling periods within said rest period a corresponding virtual keep setpoint period extending from the end of the respective virtual precooling period to the end of said rest period.

Depending on the timely arrangement of the respective virtual precooling period within said rest period said associated virtual keep setpoint period varies in time.

Further the virtual keep setpoint energy needed for keeping the setpoint within the keep setpoint period has to be determined.

Therefore, the controller determines the virtual keep setpoint energy for each of the virtual keep setpoint periods associated with a respective virtual precooling period on the basis of a keep setpoint factor for the respective keep setpoint temperature and the duration of the respective virtual keep setpoint period.

The keep setpoint factor is usually a factor which depends on the warming rate of the storage volume.

Thereafter the controller calculates the virtual keep setpoint energy costs for each of the virtual keep setpoint periods and the price defined by the price/ time correlation for the respective virtual keep setpoint periods.

Finally, the controller calculates the total energy costs for each virtual precooling period and the associated virtual keep setpoint period and selects from the virtual precooling periods and the associated virtual keep setpoint periods the combination with the lowest total energy costs as the precooling period and the associated keep setpoint period to be used within said rest period.

With this process it is possible to arrange the precooling period within the rest period at times at which the cheapest energy is available and also enables to at the same time consider the additional effect of the keep setpoint period which requires energy in addition to the precooling period.

Such keep setpoint period can have a maximum time length if the precooling period is arranged right close to the start of the rest period or it can have a zero time length if the precooling period is arranged such that it ends just at the end of the rest period.

In general the price time correlation within the rest period can be given by any definition of the price for the electric energy as a function of the time within said rest period.

One such price/time correlation can comprise for example subsequent pricing time intervals arranged within the rest period and within each pricing time intervals a constant price for the electric energy is defined.

Usually, such pricing time intervals have a duration longer than some minutes and shorter than some hours. For example the duration of such pricing time intervals maybe between half an hour and six hours, one commercial solution provides pricing time interval which last about one hour.

Further it is advantage if all of the pricing time intervals have an identical duration.

In case the price/time correlation is given by pricing time intervals the controller based on the calculated precooling energy and the power consumption of said refrigerant circuit when operated for precooling determines the minimum number of pricing time intervals required for a virtual precooling period necessary for running said refrigerant circuit in order to achieve the said point temperature.

Further the controller calculates the costs of the virtual precooling energy on the basis of the costs associated with the respective pricing time intervals incorporated into said virtual precooling period.

In addition, the controller associates with each of the virtual precooling periods within said rest period a corresponding virtual keep setpoint period comprising the pricing time intervals between the end of the respective virtual precooling period and the end of said rest period.

Based thereon the controller calculates the virtual keep setpoint costs associated with that respective virtual precooling periods on the basis of the pricing of the energy within said pricing time intervals comprised by said virtual keep setpoint periods.

Based thereon the controller calculates the total energy costs for each virtual precooling period and the associated virtual keep setpoint period and selects from the virtual precooling periods and the respective associated virtual keep setpoint period the combination with the lowest total energy costs as the precooling period and the associated keep setpoint period to be used during said rest period for precooling to the setpoint temperature and keeping the setpoint temperature.

Based on the various steps defined before the energy consumption within said rest period for precooling to the setpoint and maintaining the setpoint can be cost optimized.

However, during the rest period it is necessary to also recharge the energy storage unit.

In particular the controller calculates the recharge energy based on the energy difference between the charging stage of the energy storage unit and a predefined charged stage of the energy storage unit before start of the recharge process.

In particular such predefined charged stage of the energy storage unit can be a fully charged stage of the energy storage unit or a partially charged stage of the energy storage unit providing sufficient energy for operating said refrigerant circuit in order to maintain said set point temperature.

Said predefined charge stage can be selected by an operator or by the controller itself.

In particular the predefined charged stage is predicted on the basis of parameters of the upcoming travelling period.

In general the energy storage unit could be recharged in view of the potential energy consumption during the upcoming travelling period.

In particular the parameters of the upcoming travelling period are at least one of duration of said travelling period and warming up parameters of the insulating housing such as at least conditions of ambient air or unloading or loading time periods of the cargo.

However such prediction of the upcoming energy consumption is difficult and maybe subject to errors which would then lead to deficiencies in cooling in the course of the travelling period.

For this reason a simplified optimized method provides that the controller calculates the recharge energy based on the energy difference between the charging stage of the energy storing unit at the beginning of the rest period and the full charged stage of the energy storage unit.

In other words this provides that the energy storage unit will always be fully charged at the end of the rest period.

With respect to the determination of the charging stage of the energy storage unit several methods would be possible.

One method would be to record the power consumption of the refrigerant circuit as a function of time in the course of the preceding travelling period.

This means that the controller determines the charging stage of the energy storage unit by detecting the energy consumed during each travelling period.

A preferred solution provides that the controller determines the energy consumed during the travelling period by a Coulomb counting device.

If the power available from the charger exceeds the maximum power for precooling and a maximum power for charging the energy storage unit it is possible to calculate the minimum duration of a virtual recharge period based on the calculated recharge energy and the power consumption of said energy storage unit in the course of charging in order to fully recharge the energy storage unit.

However, in case the maximum power available from the charger is limited such that the power used for precooling and keep setpoint cooling limits the power for recharging the energy storage unit the controller determines the virtual recharge period within said rest period by subtracting from the maximum power available from the charger the precooling power and the associated keep setpoint power to be consumed in the course of the precooling period and the keep setpoint period to determine the available recharge power and based on the recharge energy and the available recharge power the controller calculates the minimum duration of a virtual recharge period necessary for fully charging the energy storage unit.

Further then the controller arranges a plurality of virtual recharge periods within said rest period.

In particular the plurality of said virtual recharge periods within said rest period comprises virtual recharge periods arranged in a time sequence of overlapping or non-overlapping virtual recharged periods.

Advantageously, overlapping virtual recharge periods are used.

This enables the controller to calculate the energy costs for each virtual recharge period according to the price of the energy to be consumed in the course of said respective virtual recharge period based on the stored price/time correlation and to select the virtual recharge period with the lowest costs for the recharge period to be used within the rest period.

In case the stored price/time correlation comprises pricing time intervals the controller determines a virtual recharge period by selecting the minimum pricing time intervals which are necessary for fully charging the energy storage unit within said rest period.

Thereafter, the controller calculates the energy costs for each virtual recharge period according to the price of the energy within said pricing time intervals used for charging said energy storage unit during said respective virtual recharge period and selects the virtual recharge period with the lowest costs as the recharge period to be used during the rest period.

If the price/time correlation comprise pricing time intervals as mentioned before, the controller determines a virtual recharge period by selecting the minimum pricing time intervals which are necessary for fully charging the energy storage unit within said rest period.

Further in such a case controller calculates the energy costs for each virtual recharge period according to the price for the energy within said pricing time intervals used for charging said energy storage unit during said respective virtual recharge period and selects the virtual recharge period with the lowest costs as the recharge period to be used.

Further features and advantages of the present invention are explained in the following detailed specification of embodiments of the present invention.

In the drawings:
- Fig. 1: shows a schematic representation of a transport refrigeration system according to the present invention;
- Fig 2: shows one example of a transport refrigeration system used in connection with a truck;
- Fig. 3: shows a front view in direction of arrow A of said truck in a rest position close to a charger;
- Fig. 4: shows a sectional view along lines 4-4 in Fig. 1;
- Fig. 5: shows a schematic representation of a refrigerant circuit according to the present invention;
- Fig. 6: shows details of a controller in connection with an energy management device and the charger in operation within the rest period;
- Fig. 7: shows a first example of the operation of the transport refrigeration system in the course of a rest period according to a first example price/time correlation; and
- Fig. 8: shows a second example of the operation of the transport refrigeration system during a rest period according to a second example of a price/time correlation.

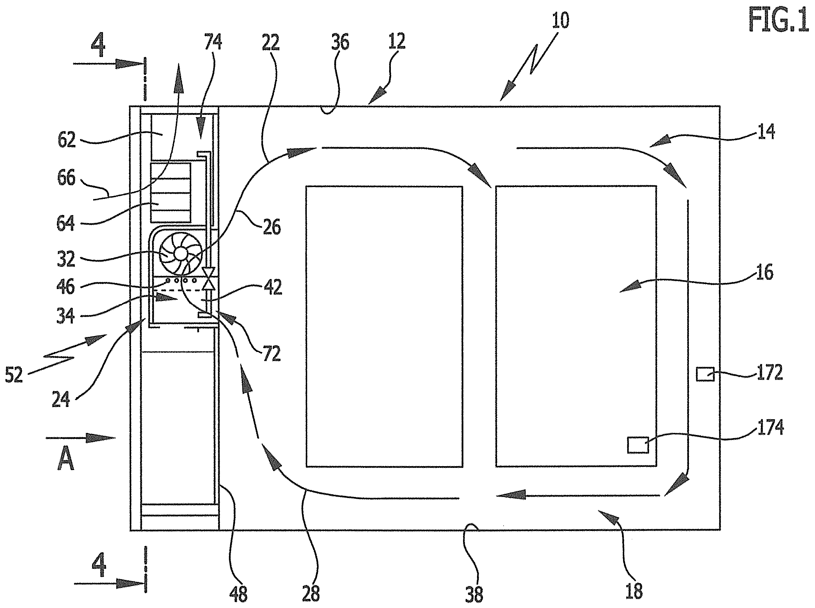

The invention is explained for example in connection with a transport refrigeration system 10, in particular a storage unit, comprising an insulated housing 12 enclosing a storage volume 14 within which temperature sensitive cargo 16 is received and surrounded by a gaseous medium 18, in particular air, which is kept at a setpoint temperature ST for maintaining said cargo 16 in a defined temperature range (Fig. 1).

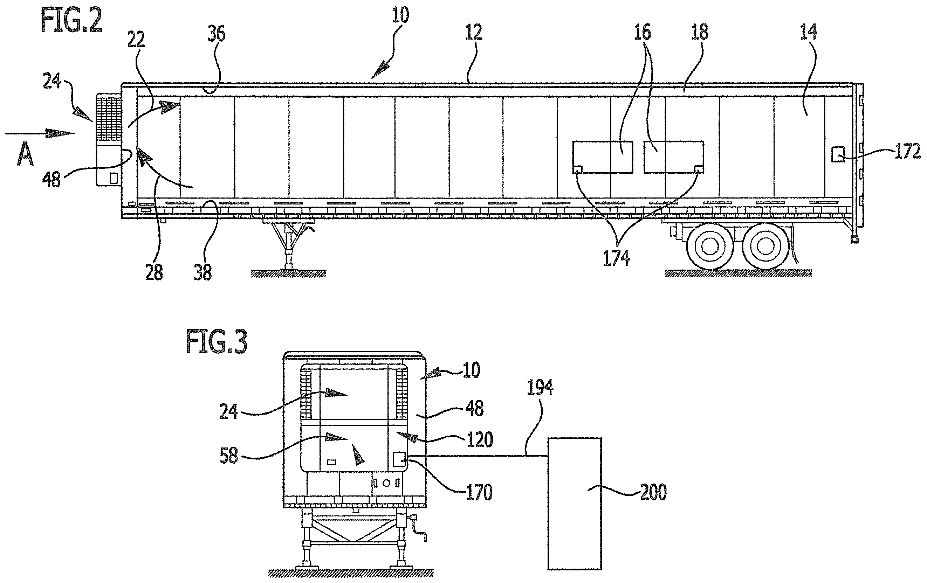

Said storage unit 10 can be a transportable storage unit, in particular a reefer, for example of a truck or a trailer (Fig. 2, 3) or a railway carriage transporting cargo 16 or a conventional container for shipping cargo 16 by truck or railway.

In order to maintain a defined or setpoint temperature of cargo 16 a flow 22 of said gaseous medium 18 is circulating through volume 14 by starting from a tempering unit 24 as a supply gas flow 26 and entering tempering unit 24 as a return gas flow 28.

The circulating flow 22 of gaseous medium is for example generated by a blower arrangement 32 preferably arranged within tempering unit 24 and tempered by a heat exchange unit 34 arranged within tempering unit 24 (Fig. 1).

Preferably supply gas flow 26 exits from tempering unit 24 in an area close to an upper wall 36 of insulated housing 12 and preferably returns to tempering unit 24 close to a lower wall 38 of insulated housing 12 forming said return gas flow 28.

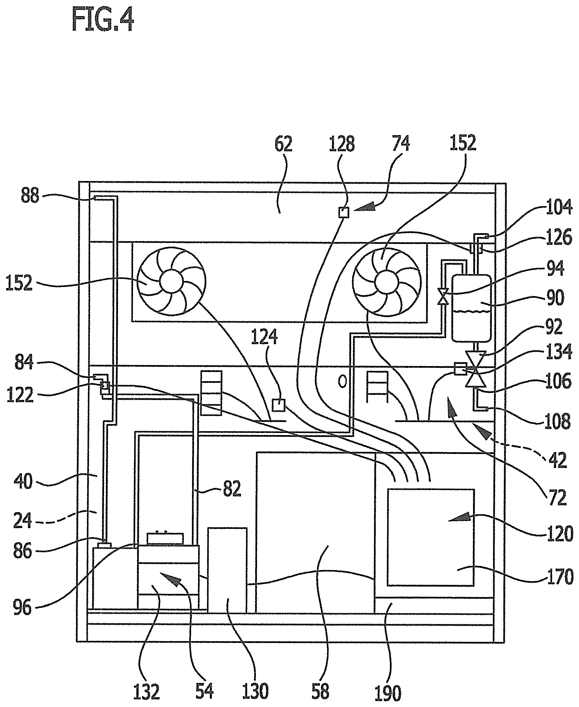

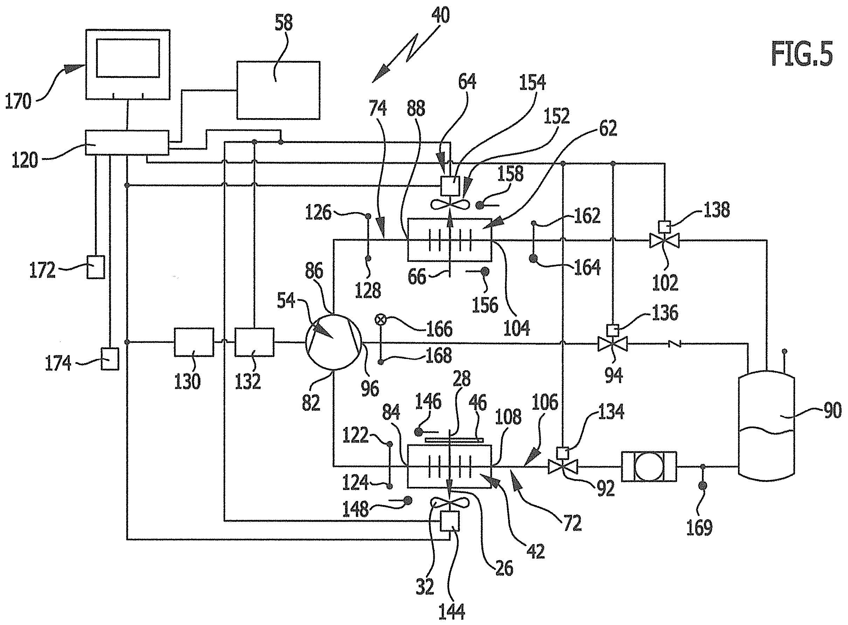

According to a preferred embodiment tempering unit 34 is part of a refrigerant circuit 40 and comprises a heat absorbing heat exchanger 42 integrated into said refrigerant circuit 40 as shown in Fig. 4 and 5 which in particular further comprises heaters 46 which are for example electric heaters, used for example for defrosting heat absorbing heat exchangers 42.

Tempering unit 24 is for example arranged between lower wall 38 and upper wall 36 of isolated housing 12, in particular on a front wall 48 or a rear wall thereof.

However, tempering unit 24 can also be arranged on upper wall 36 or lower wall 38.

Tempering unit 24 is associated with peripheric unit 52 arranged on an outer side of housing 12 which comprises a heat releasing heat exchanger 62 and a blower arrangement 64 for generating a flow of ambient air 66 through heat releasing heat exchanger 62 and a compressor arrangement 54 of said refrigerant circuit 40 (Fig. 4).

Peripheric unit 52 further comprises an energy storage unit 58, in particular represented by a battery, provided and for example integrated in peripheric unit 52, which is supplying electric power during a travelling period TP for operating refrigerant circuit 40 independent of an any electrical grid, in particular a grid of a mains power supply network, and said energy storage unit 58 is rechargeable by any power supply from time to time.

It is possible to provide said transport refrigeration system 10 with solar panels in addition to said energy storage unit 58 but this will only be a supplemental energy source during said travelling period TP.

After said travelling period TP said transport refrigeration system 10 is located stationary for a rest period RP in order to supply electric energy from a charger 200 connected to an electrical grid to said energy storage unit 58 and at least to precool said storage volume 14 by operating refrigerant circuit 40 (Fig.3).

Refrigerant circuit 40, as shown in Fig. 4 and 5, comprises a low pressure section 72, in which heat absorbing heat exchanger 42 is arranged and a high pressure section 74, in which a heat releasing heat exchanger 62 is arranged, and the compressor arrangement 54 is connected with a suction connection 82 to low pressure section 72 of refrigerant circuit 40, in particular to an outlet 84 of heat absorbing heat exchanger 42, and is connected with a discharge connection 86 to high pressure section 74 of refrigerant circuit 40, in particular to an inlet 88 of heat releasing heat exchanger 62, so that compressor arrangement 54 generates and thereby compresses a flow of refrigerant from low pressure section 72 to high pressure section 74.

Further cooling circuit 40 as shown in Fig. 5 comprises an value device 94 being connected directly or indirectly to an outlet 104 of heat releasing heat exchanger 62, for example via an expansion device 102 and a flash gas tank 90 for liquid refrigerant, and expansion device 92 is connected with its outlet 106 to an inlet 108 of heat absorbing heat exchanger 42.

Gasous refrigerant collected above a bath of liquid refrigerant in receiver 90 is expanded via expansion device 94 to an intermediate pressure and guided to intermediate pressure connection 96 of two stage compressor arrangement 54.

Electric drive 132, for example an electric motor, of compressor arrangement 54 is cooled by air or cooled by refrigerant from heat absorbing heat exchanger 42 before being compressed to high pressure at discharge connection 86.

However, as an alternative electric drive 132 can also be cooled by refrigerant supplied via intermediate pressure connection 96 or compressed refrigerant at high pressure before leaving through discharge connection 86.

A controller 120 associated with cooling circuit 40 is for example connected to a pressure sensor 122 associated with low pressure section 72 and/or a temperature sensor 124 associated with low pressure section 72 and also connected to a pressure sensor 126 associated with high pressure section 74 and/or a temperature sensor 128 associated with high pressure section 74.

Further controller 120 is for example connected to a variable frequency converter 130 powering variable frequency electric drive 132, being for example an electric motor, representing a first actuator for driving compressor arrangement 54 and controller 120 is further connected to an adjusting drive 134 for adjusting expansion device 92.

Drive 134 is an electric drive representing another possible actuator for adjusting expansion device 92 which is for example an expansion valve.

Further an additional adjusting drive 136 is representing another possible actuator for adjusting expansion device 94.

In addition, another adjusting drive 138 is representing another possible actuator for adjusting expansion device 102.

Said cooling circuit 40 is in particular operated by said controller 120 in a heat transfer mode in which compressor arrangement 54 is driven speed controlled by means of variable frequency converter 130 for powering electric drive 132 and said expansion device 92 is controlled in accordance with the amount of heat to be transferred from said heat absorbing heat exchanger 42 extracting heat from said return gas flow 28 in order to obtain a cooled supply gas flow 26 blown into storage volume 14 to heat releasing heat exchanger 62 releasing heat into the flow of ambient air 66 depending on the temperature of the flow of ambient air 66.

In order to maintain a defined circulating flow of ambient air 66, heat releasing heat exchanger 62 is associated with a blower arrangement 152 driven by electric drive 154 representing a second actuator, for example an electric motor, which is controlled by controller 120.

The operation of heat releasing heat exchanger 62 is monitored by a temperature sensor 156 detecting the temperature of ambient air and for example in addition a temperature sensor 158 detecting the temperature of exiting air.

The operation of heat releasing heat exchanger 62 can be further monitored by a pressure sensor 162 and/or a temperature sensor 164 detecting the refrigerant output by heat releasing heat exchanger 62.

Said pressure sensor 162 and said temperature sensor 164 are connected to controller 120.

In order to maintain a defined flow 22 of gaseous medium 18 heat exchanger unit 34 is associated with blower arrangement 32 driven by an electric drive, for example by a frequency controlled electric drive 144, in particular comprising an electric motor, representing a third actuator which is controlled by controller 120.

In addition, an improved monitoring of the operation of heat exchanger unit 34, in particular heat absorbing exchanger 42, is possible by controller 120 if a temperature sensor 146 is provided detecting the temperature of return gas flow 28 and a temperature sensor 148 is provided detecting the temperature of supply gas flow 26.

In addition, for monitoring the operation of refrigerant circuit 40 by controller 120 refrigerant circuit 40 is provided with a pressure sensor 166 and/or a temperature sensor 168 for refrigerant entering compressor arrangement 54 at intermediate pressure connection 96 after valvedevice 94.

Further a temperature sensor 169 enables detection of the temperature at the liquid exit of flash gas tank 90.

In order to obtain information of the temperature of the cargo 16 itself a cargo space sensor 172 (Fig. 1, 5) within storage volume 14 is provided, for example in maximum distance from tempering unit 24 and/or at least one cargo temperature sensor 174 is attached to the cargo 16 itself, in communication, in particular wireless communication, with controller 120.

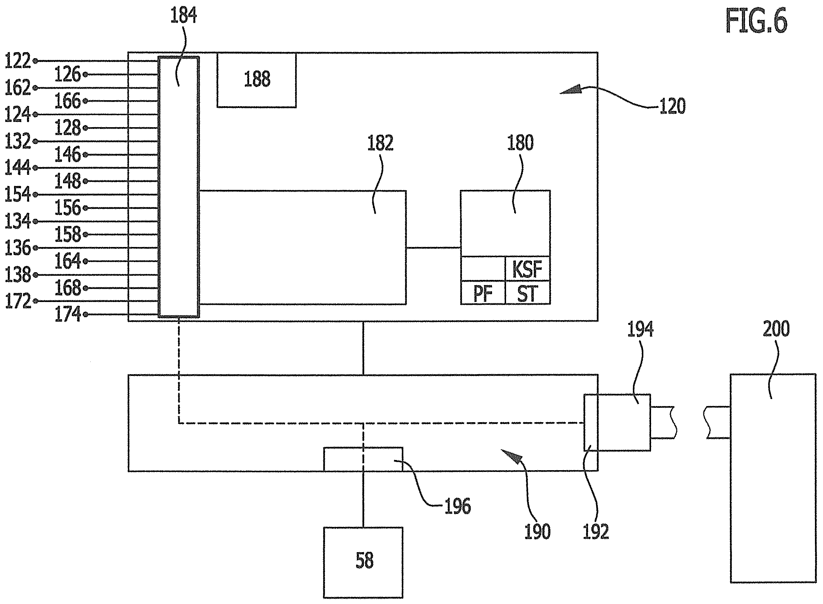

Controller 120 in particular comprises a processor 182 associated with a memory 180 (Fig. 6), for storing a program code and data necessary for the operation of refrigerant circuit.

Controller 120 is provided with a user panel 170 enabling operational control and for example access to data in memory 180 and in particular input of data to be stored in memory 180.

In particular an input/output unit 184 of controller 120 is associated with processor 182 which enables operation of actuators 132, 154, 144, and if necessary further actuators 134, 136, 138 and detection of sensor values of all temperature sensors 124, 128, 146, 148, 156, 158, 164, 168, 172, 174 and pressure sensors 122, 126, 162, 166 in refrigerant circuit 40 (Fig. 6) for detecting parameters used in order to control for example actuators 132, 154, 144 and if necessary further actuators 134, 136, 138.

Controller 120 further controls an energy management device 190 which is provided with the connecting element 192 which in enables an electrical connection to a charger 200 for example wire a connector cable 194 of said charger 200.

Charger 200 is located stationary in a charging location, at which the storage unit 10 is positioned during the rest period RP in the course of which energy management device 190 connects the charger 200 to energy storage unit 58 and/or to electric drive 132 for driving compressor arrangement 54 or other drives of said refrigerant circuit 40 used for operating refrigerant circuit 40 for precooling of said storage volume 14 with refrigerant circuit 40 or for keep setpoint cooling of storage volume 14 until a travelling period TP starts, in the course of which temperature sensitive cargo 16 is loaded, delivered and unloaded.

During said travelling period TP controller 120 controls refrigerant circuit 40 in particular by controlling drive 132 and other drives 134, 136, 138, 144, 154 by using the electric energy stored in energy storage unit 58 in order to maintain the setpoint temperature within storage volume 14.

However, during the rest period RP controller 120 controls energy management device 190 in order to enable precooling of said storage unit 14 and thereafter keep setpoint cooling of said storage volume 14 by the energy supplied to energy management device 190 by charger 200 and/or controls charging of energy storage unit 58 with the energy supplied by charger 200 to energy management device 190.

Further energy management device 190 is provided with a Coulomb counting device 196 which counts the electric energy extracted from energy storage unit 58 during said travelling period TP in order to provide controller 120 with the information concerning the required recharge energy ERC for fully charging energy storage unit 58.

Further for precooling said storage volume 14 during said rest period RP controller 120 detects the temperature withing storage volume 14 with sensor 172 or - if cargo 16 is existing with sensor 174 - at the time energy management device 190 is connected to charger 200 and by determining the difference between these temperature values and a setpoint temperature ST stored in memory 180 and multiplying said temperature difference with a precooling factor PF also stored in memory 180 controller 120 calculates the precooling energy EPC for the cooling down of storage volume 14 to setpoint temperature ST.

Further after precooling the setpoint temperature ST within storage volume 14 has to be maintained until the end of rest period RP or the start of the travelling period TP.

For this reason controller 120 also calculates the keep setpoint energy EKS necessary for maintaining the setpoint temperature ST until the travelling period TP starts and operation of refrigerant circuit 40 will then be powered by energy storage unit 58.

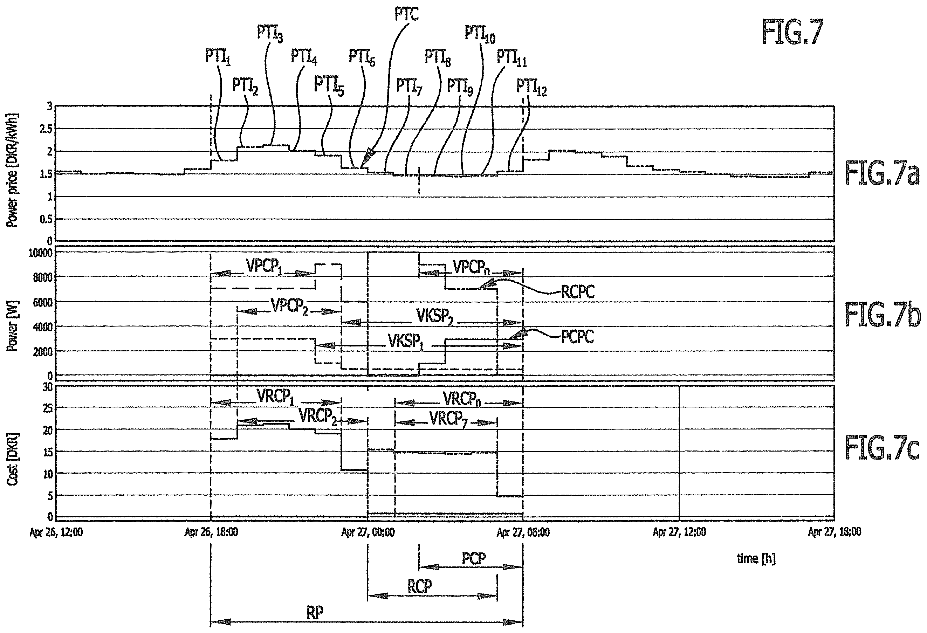

The pricing of the electric energy supplied by charger 200 depends on the time of the day at which the electric energy is supplied from charger 200 to energy management device 190. These variations are defined by a price/time correlation PTC as shown for example in Fig. 7a.

According to the invention the costs for the electric energy supplied from charger 200 to energy management device 190 during said rest period RP shall be minimized.

In general the defined price/time correlation PTC can be represented by any kind of function defining the variation of the price for the electric energy to be consumed at the respective point of time depending on the grid management.

In general controller 120 calculates the precooling energy EPC which is necessary for precooling storage volume 14 and eventually part of cargo 16 arranged therein based on the difference between an actual temperature determined within cargo volume 14, for example by one or all of temperature sensors 172 and 174, and a given setpoint temperature ST considered to be necessary for the upcoming travelling period TP and a precooling factor PF associated with said storage volume 14.

The setpoint temperature ST and the precooling factor PF are stored for example in memory 180.

Based on this calculated precooling energy EPC controller 120 calculates the power consumption of said refrigerant circuit when operated for precooling in particular the power consumption of all drives 132, 134, 136, 138, 144, 154 as mentioned before.

Based on these data controller 120 is able to calculate the minimum amount of time for which the refrigerant circuit 40 has to be run in order to supply the determined precooling energy to storage volume 14.

This minimum of time for which the refrigerant circuit 40 has to be run will define the minimum duration of a virtual precooling period VPCP necessary in order to achieve the setpoint temperature ST within storage volume 14.

However, during the length of the available rest period RP operation of the refrigerant circuit 40 for a virtual precooling could take place any time.

However after termination of said virtual precooling period it is necessary to keep the setpoint temperature ST within storage volume 14 until rest period RP is terminated and travelling period TP will start.

This has the consequence that it is necessary to consider the time at which a virtual precooling period will take place and then to evaluate the energy necessary for keeping the setpoint temperature ST from the end of said virtual precooling period VPCP to the end of the rest period RP.

In order to optimize the price for precooling and the price for maintaining the setpoint temperature ST in view of the given price/time correlation PTC controller 120 arranges a plurality of virtual precooling periods VPCP starting and ending at different time within rest period RP.

In particular these virtual precooling periods are arranged in a time sequence within said rest period either by arranging these virtual precooling periods in sequence and in overlapping or non-overlapping manner.

Having arranged these virtual precooling periods VPCP within the rest period RP controller 120 can then start to calculate the virtual precooling energy costs for each of the virtual precooling period VPCP on the basis of the price defined by the price/time correlation PTC for the respective virtual precooling period VPCP.

In addition controller 120 associates with each of the virtual precooling periods VPCP within said rest period RP a corresponding virtual keep setpoint period VKSP in order to keep the setpoint temperature ST which virtual keep setpoint period VKSP extends from the end of the respective virtual precooling period VPCP to the end of the rest period RP.

Having the length of the virtual precooling period VPCP calculated the controller 120 determines the virtual keep setpoint energy VEKS for each of the virtual keep setpoint periods VKSP associated with the respective virtual precooling period VPCP on the basis of a keep setpoint factor KSF at the respective setpoint temperature ST, which keep setpoint factor KSF depends on the warming rate of storage volume 14 at the respective setpoint temperature ST.

This keep setpoint factor KSF is then multiplied with the duration of the respective virtual keep setpoint period VKSP in order to obtain the virtual keep setpoint energy VEKS associated with the respective virtual keep setpoint period VKSP.

Based on the virtual keep setpoint energy VEKS controller 120 calculates the virtual keep setpoint energy costs for each of the virtual keep setpoint period VKSP and the price defined by the price/time correlation for the respective virtual keep setpoint periods VKSP.

Based on the virtual precooling energy costs for each of the virtual precooling periods VPCP and the virtual keep setpoint energy costs for each of the respective virtual keep setpoint periods VKSP the controller calculates the total energy costs for each virtual precooling period VPCP and the associated virtual keep setpoint period VKSP and selects from the virtual precooling periods VPCP and the associated virtual keep setpoint periods VKSP the combination with the lowest total energy costs as the precooling period PCP and the associated keep setpoint period KSP to be used for precooling and keeping the setpoint ST till the end of the rest period RP.

The explanations given before refer to any kind of defined price time correlation PTC.

Fig. 7a shows a specific price/time correlation PTC for the electric energy which comprises subsequent pricing time intervals PTI and within each of the pricing time intervals PTI the price for the electric energy is determined.

For example Fig. 7a shows a rest period RP having a duration of 12 hours and this rest period for example starts in the evening at 18:00 o'clock and ends for example in the next morning at 08:00 o'clock.

In this particular defined price/time correlation PTC the price for the electric energy consumed is always constant within one of the pricing time intervals PTI and each pricing time interval PTI lasts for one hour.

Therefore, according to the example shown in Fig. 7 the rest period RP comprises in summary 12 pricing time intervals PTI₁ bis PTI₁₂.

According to the specific embodiment shown in Fig. 7 the precooling energy EPC is calculated as explained before based on the precooling factor PF and the difference between the actual temperature detected within storage volume 14 and the given setpoint temperature ST.

However, due to the fact that the price/time correlation PTC comprises subsequent pricing time intervals PTI the controller based on the calculated precooling energy EPC and the power consumption of that refrigerant circuit 40 when operated for precooling determines the minimum number of pricing time intervals PTI required for a virtual precooling period VPCP necessary for running the refrigerant circuit in order to achieve the setpoint temperature ST.

For example as shown in Fig. 7 controller 120 will determine the minimum number of pricing time intervals PTI required for the virtual precooling period VPCP necessary for running the refrigerant circuit in order to achieve the setpoint temperature ST to be for.

Consequently the controller will arrange subsequent overlapping virtual precooling periods VPCP₁ to VPCPₙ within rest period RP wherein in the specific case shown in Fig. 7b with a rest period of 12 hours and each pricing time interval PTI lasting for one hour n will be 8 so there will be in summary according to Fig. 7b seven virtual precooling periods within rest period RP.

Thereafter controller 120 will calculate the costs of the virtual precooling energy VEPC on the basis of the costs associate with each of the pricing time intervals PTI incorporated into the respective virtual precooling period VPCP.

As it is obvious from the price/time correlation PTC shown in Fig. 7a controller 120 will calculate high costs for the first five virtual precooling periods VPCP because the price of the energy supplied within these virtual precooling periods is expensive and lower costs for the remaining virtual precooling periods.

Further the controller 120 will associate with each of the virtual precooling periods VPCP arranged within said rest period RP a corresponding virtual keep setpoint period VKSP comprising the pricing time intervals PTI between the end of the respective virtual precooling period VPCP and the end of the rest period.

As can be seen from Fig. 7b the virtual keep setpoint period VKSP₁ has the longest duration whereas the virtual keep setpoint period VKSP₂ is already shorter by an hour whereas the virtual keep setpoint period VPCPₙ ending with the rest period RP will make even no virtual keep setpoint period VKSPₙ necessary as clearly shown in Fig. 7b.

Further controller 120 calculates the virtual keep setpoint costs associated with said virtual precooling periods VPCP on the basis of the pricing of the energy within said pricing time intervals PTI comprised by said associated virtual keep setpoint period VKSP taking further into account the stored keep setpoint factor KSF for the respective keep setpoint temperature ST and the duration of the respective virtual keep setpoint period VKSP.

Thereafter controller 120 can calculate the total energy costs for each of the virtual precooling periods VPCP and the associated virtual keep setpoint period VKSP and selects from the virtual precooling periods VPCP and the associated virtual keep setpoint periods VKSP the combination having the lowest total energy costs as the precooling period PCP and the associated keep setpoint period KSP to be used.

In the example shown in Fig. 7, due to the fact that the pricing from price time intervals PTI₉ to PTI₁₂ is quite low the result will be that the virtual precooling period VPCPₙ ending with the rest period and making no virtual keep setpoint period VKSP necessary will be the precooling period PCP to be selected and used for precooling as can be seen in Fig. 7.

After determination of the precooling period PCP to be used and the associated keep setpoint period KSP to be used if necessary the next step refers to the calculation of the recharge energy ERC for the energy storage unit 58.

According to the present invention the recharge energy before charging the energy storing unit is predefined.

The recharge energy can be predefined to be the energy for ending up at a fully charged stage of the energy storage unit or a partially charged stage providing sufficient energy for operating said refrigerant circuit in order to maintain said set point temperature.

There are several possibilities to predefine the charged stage of the energy storage unit 58 to be achieved.

One possibility is that the charged stage to be achieved is predefined by operator.

Another possibility is that the charged stage to be achieved is defined by controller 120.

In general it would be possible to determine the recharge energy ERC for the energy charging unit depending on the energy consumption in the course of the next following traveling period TP.

In particular it is of advantage that the predefined charged stage is predicted on the basis of parameters of the upcoming travelling period TP.

For example the parameters of the upcoming travelling period TP are at least one of duration of said travelling period TP, and warming up parameters of the insulated housing 12 such as at least one of thermal isolation of the insulated housing 12, conditions of the ambient air, unloading and/or loading time periods of the cargo 16.

However, due to the fact that the energy consumption in the next travelling period is difficult to determine or to predict, a simplified determination of the recharge energy ERC for the energy storage unit 58 provides that the energy storage unit 58 is always to be fully charged during the rest period RP.

This means that the controller 120 can calculate the recharge energy ERC based on the energy difference between the charging state of the energy storage unit 58 at the beginning of the rest period RP and the fully charged stage of the energy storage unit 58.

In order to determine the charging stage of the energy storage unit 58 the controller uses a Coulomb counting device 196 which during the travelling period TP counts the energy consumed by refrigerant circuit 40.

Based thereon controller 120 determines virtual recharge periods VRCP within said rest period RP by subtracting from the maximum power available from the charger 200 the precooling power and the keep setpoint power to be consumed in the course of the precooling period PCP and the associated keep setpoint period KSP to determine the available recharge power and based on the recharge energy ERC and the available recharge power controller 120 calculates the minimum duration of a potential recharge period VRCP necessary for fully charging the energy storage unit 58.

Based on the calculated minimum duration of a virtual recharge period VPCP controller 120 can arrange a plurality of said virtual recharge periods VRCP within said rest period RP in particular by a sequence of either overlapping or non-overlapping virtual recharge periods VPCP.

For each of these virtual recharge periods VPCP controller 120 calculates the price for the energy to consumed in the course of said respective virtual recharge periods VPCP based on the stored price/time correlation PTC and selects the virtual recharge period VRCP with the lowest costs as the recharge period RCP to be used during the rest period RP.

Applied on the specific price/time correlation PTC shown in Fig. 6a controller 120 determines as the virtual recharge period VRCP to be selected the one comprising the minimum pricing time intervals PCI which are necessary for fully charging the energy storage unit 58 within said rest period RP.

As shown in Fig. 7c for example there can be numerous virtual recharge periods VRCP arranged within rest period RP and according to the special situation of the pricing given by the price/time correlation PTC virtual recharge period VRCP₇ will be the one providing the lowest costs.

If controller 120 calculates the energy costs for each of the virtual recharge periods VRCP according to the price for the energy within the pricing time intervals PTI used for charging the energy storage unit 58 during said respective virtual recharge period VRCP and therefore as a consequence controller 120 selects the virtual recharge period VRCP with the lowest costs as the recharge period RCP to be used during said rest period RP.

For the purpose of illustration Fig. 7b shows one example of the precooling power consumption PCPC determined according to the present invention and the resulting recharge power consumption RCPC in relation to the time within the rest period RP and in relation to the price/time correlation PTC shown in Fig. 7a.

Fig. 7 therefore obviously demonstrates that the precooling period PCP and the recharge period PCP have been arranged to consume energy during those price/time intervals PTI having the lowest price for the energy consume this are in the example according to Fig. 7 price/time intervals PTI₇ to PTI₁₂.

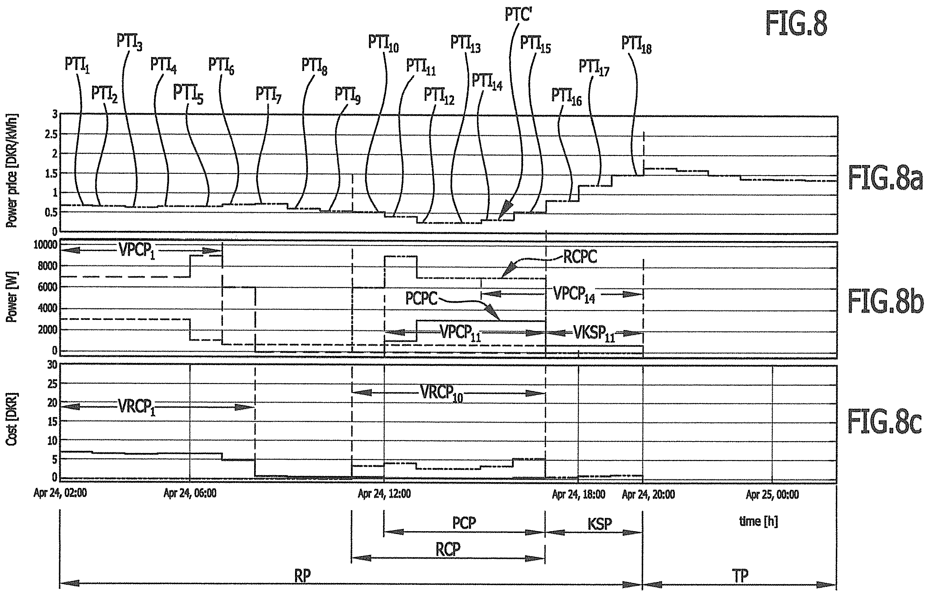

However the situation changes if a different price/time correlation PTC' is used which is for example shown in Fig. 8a.

Further Fig. 8a provides a rest period RP lasting from 2 o'clock of a day to 20:00 o'clock of a day so that the rest period RP in this case will extend from the night to the evening if a day with the consequence that the energy in the price time intervals PTI before the end of the rest period RP will be more expensive.

Even this case for example the controller 120 determines that the minimum number of price/time intervals PTI necessary for each virtual precooling period VPCP will be five price time intervals PIT and the controller 120 to each of these virtual precooling periods VPCP₁ to VPCP₁₄ will determine the respective associated virtual keep setpoint VKSP and will minimize the total energy costs thereof.

In the example shown in Fig. 8 the total energy costs for each virtual precooling period VPCP and the associated virtual keep setpoint period VKSP are calculated and the result is that virtual precooling period VPCP₁₁ and the associated virtual keep setpoint period VKSP₁₁ have the lowest energy costs so that this virtual precooling period VCP₁₁ is selected to represent the precooling period PCP and the associated virtual keep setpoint period VKSP₁₁ is selected to be the keep setpoint period KSP used in the rest period RP.

In the same manner as described before the length of the virtual recharge period VRCPin terms of pricing times intervals PTI is determined and in the example according to Fig. 8 the virtual recharge periods VRCP have a length of in summary six price/time intervals PTI.

After calculating the total energy costs each virtual recharge period VPCP controller 120 selects the virtual recharge period VRCP having the lowest energy costs as the recharge period RCP to be used within the rest period RP.

For the purpose of illustration Fig. 8b shows one example of the precooling power consumption PCPC determined according to the present invention and the resulting recharge power consumption RCPC in relation to the time within the rest period RP and in relation to the price/time correlation PTC shown in Fig. 8a.

## Claims

1. Transport refrigeration system, in particular for a storage unit (10), comprising a storage volume (14) for temperature sensitive cargo (16) and a refrigerant circuit (40) for cooling said storage volume (14), said refrigerant circuit (40) comprising a compressor arrangement (54) driven by an electric motor (132) and an energy storage unit (58) for supplying energy for operating said refrigerant circuit (40), wherein that said transport refrigeration system during a travelling period (TP) is used for loading and delivering said cargo (16) and during said travelling period (TP) said refrigerant circuit (40) is powered by said energy storage unit (58) in order to operate said refrigerant circuit (40) for maintaining a setpoint temperature (ST) within said storage volume (14), wherein said transport refrigeration system (10) during a rest period (RP) remains stationary in a charging location wherein in said charging location said refrigeration circuit (40) is connected to and powered by a charger (200) connected to a local electrical grid for precooling said storage volume (14) to a setpoint temperature (ST) and for maintaining said setpoint temperature (ST) up to the end of the rest period (RP) and for charging said energy storage unit (58) for the next travelling period (TP) and in that a controller (120) determines the charge level of said energy storage unit (58) and calculates the required recharge energy (ERC) and further determines the temperature of the storage volume (14) and calculates the required precooling energy (EPC) and the required keep setpoint energy (EKSP) **characterized in that** said controller (120) uses a given price/time correlation (PTC) for the electric energy consumed within the remaining rest period (RP) for a price optimized timing of a recharge period (RP) for supplying the required recharge energy (ERC) and timing of a precooling period (PCP) for supplying the required precooling energy (EPC) and timing of a keep setpoint period (KSP) for supplying the required keep setpoint energy (EKSP).

2. Transport refrigeration system according to claim 1, wherein the price/time correlation (PTC) defines a price for the energy consumed at the respective time (t) within the rest period (RP).

3. Transport refrigeration system according to claim 1 or 2, wherein said precooling energy (EPC) is calculated by said controller (120) according to the difference between an actual temperature detected within storage volume (14) and the given setpoint temperature (ST) for the upcoming travelling period (TP) and a precooling factor (PF) associated with said storage volume (14).

4. Transport refrigeration system according to one of the preceding claims, wherein said controller (120) based on the calculated precooling energy (EPC) and the power consumption of said refrigerant circuit (40) when operated for precooling calculates the minimum duration of a virtual precooling period (PPCP) necessary for running said refrigerant circuit (40) in order to achieve the setpoint temperature (ST) within said storage volume (14), in particular wherein the controller (120) arranges a plurality of said virtual precooling periods (VPCP) starting at different times within said rest period (RP), in particular wherein the plurality of virtual precooling periods (VPCP) within said rest period (RP) comprises virtual precooling periods (VACP) arranged in a time sequence of overlapping or non-overlapping virtual precooling periods (VCPCP).

5. Transport refrigeration system according to claim 4 , wherein the controller (120) calculates the virtual precooling energy costs for each of the virtual precooling periods (VPCP) on the basis of the price defined by the price/ time correlation (PTC) for the respective virtual precooling periods (VPCP).

6. Transport refrigeration system according to one of claims 4 to 5, wherein said controller (120) associates with each of the virtual precooling periods (VPCP) within said rest period (RP) a corresponding virtual keep setpoint period (VKSP) extending from the end of the respective virtual precooling period (VPCP) to the end of said rest period (RP), in particular wherein the controller (120) determines the virtual keep setpoint energy (VEKS) for each of the virtual keep setpoint periods (VKSP) associated with a respective virtual precooling period (VPCP) on the basis of a keep setpoint factor (KSF) for the respective setpoint temperatures (ST) and the duration of the respective virtual keep setpoint period (VKSP), in particular wherein the controller (120) calculates the virtual keep setpoint energy costs for each of the virtual keep setpoint periods (VKSP) and of the price defined by the price/time correlation (PTC) for the respective virtual keep setpoint periods (VKSP), in particular wherein the controller (120) calculates the total energy costs for each virtual precooling period (VPCP) and the associated virtual keep setpoint period (VKSP) and selects from the virtual precooling periods (VPCP) and the associated virtual keep setpoint periods (VKSP) the combination with the lowest total energy costs as the precooling period (PCP) and the associated keep setpoint period (KSP) to be used.

7. Transport refrigeration system according to one of the preceding claims, wherein the price/time correlation (PTC) comprises subsequent pricing time intervals (PTI) arranged within the rest period (RP) within each pricing time interval (PTI) a constant price for the electric energy is defined, in particular, wherein the pricing time intervals (PTI) have a duration longer than some minutes and shorter than some hours, and/or wherein in particular the pricing time intervals (PTI) have an identical duration, and/or wherein in particular said controller (120) based on the calculated precooling energy (EPC) and the power consumption of said refrigerant circuit (40) when operated for precooling determines the minimum number of pricing time intervals (PTI) required for a virtual precooling period (VPCP) necessary for running said refrigerant circuit (40) in order to achieve the setpoint temperature (ST), in particular wherein said controller (120) calculates the costs of the virtual precooling energy (VEPC) on the basis of the costs associated with the respective pricing time intervals (PTI) incorporated by said virtual precooling period (VPCP).

8. Transport refrigeration system according to claim7, wherein the controller (120) associates with each of the virtual precooling periods (VPCP) within said rest period (RP) a corresponding virtual keep setpoint period (VKSP) comprising the pricing time intervals (PTI) between the end of the respective virtual precooling period (VPCP) and the end of said rest period (RP), in particular wherein said controller (120) calculates the virtual keep setpoint costs associated with said respective virtual precooling periods (VPCP) on the basis of the pricing of the energy within said pricing time intervals (PTI) comprised by said virtual keep setpoint period (VKSP), and/or wherein in particular the controller (120) calculates the total energy costs for each virtual precooling periods (VPCP) and the associated virtual keep setpoint period (VKSP) and selects from the virtual precooling periods (VPCP) and the respective associated virtual keep setpoint period (VKSP) the combination with the lowest total energy costs as the precooling period (PCP) and the associated keep setpoint period (KSP) to be used.

9. Transport refrigeration system according to one of the preceding claims, wherein the controller (120) calculates the recharge energy (ERC) based on the energy difference between charging stage of the energy storage unit (58) and a predefined charged stage of the energy storage unit (58), in particular wherein said predefined charged stage of said energy storage unit (58) can be a fully charged stage of said energy storage (58) or a partially charged stage of said energy storage unit (58) providing sufficient energy for operating said refrigerant circuit (40) in order to maintain said set point temperature (ST), in particular wherein said predefined charged stage is selected by an operator or the controller (120), in particular wherein the predefined charged stage is predicted on the basis of parameters of the upcoming travelling period (TP), in particular wherein the parameters of the upcoming travelling period (TP) are at least one of duration of said travelling period (TP) and warming up parameters of the insulated housing (12) which comprise for example conditions of ambient air or unloading or loading time periods of the cargo (16), and/or wherein in particular the controller (120) determines the charging stage of the energy storage unit (58) by detecting the energy consumed during each travelling period (TP), in particular wherein the controller (120) determines the energy consumed during the travelling period by a Coulomb counting device (196).

10. Transport refrigeration system according to claim 9, wherein the controller (120) determines virtual recharge period (VRCP) within said rest period (RP) by subtracting from the maximum power available from the charger (200) the precooling power and the associated keep setpoint power to be consumed in the course of the precooling period (PCP) and the keep setpoint period (KSP) to determine the available recharge power and based on the recharge energy (ERC) and the available recharge power the controller (120) calculates the minimum duration of a virtual recharge period (VRCP) necessary for fully charging the energy storage unit (58), in particular wherein the controller (120) arranges a plurality of virtual recharge periods (VRCP) within said rest period (RP), in particular wherein the plurality of said virtual recharge periods (VRCP) within said rest period (RP) comprises virtual recharge periods (VRCP) arranged in a time sequence of overlapping or nonoverlapping virtual recharge periods (VRCP), and/or wherein in particular said controller (120) calculates the energy costs for each virtual recharge period (VRCP) according to the price for the energy to be consumed in the course of said respective virtual recharge period (VRCP) based on the stored price/time correlation (PTC) and selects the virtual recharge period (VRCP) with the lowest costs as the recharge period (RCP) to be used.

11. Transport refrigeration system according to one of claims 9 or 10, wherein the controller (120) determines a virtual recharge period (VRCP) by selecting the minimum pricing time intervals (PCI) which are necessary for fully charging the energy storage unit (58) within said rest period (RP), in particular wherein controller (120) calculates the energy costs for each virtual recharge period (VRCP) according to the price for the energy within said pricing time intervals (PTI) used for charging said energy storage unit (58) during said respective virtual recharge period (VRCP) and selects the virtual recharge period (VRCP) with the lowest costs as the recharge period (RCP) to be used.

12. Method for operating transport refrigeration system, in particular a storage unit (10), comprising a storage volume (14) for temperature sensitive cargo (16) and a refrigerant circuit (40) for cooling said storage volume (14), said refrigerant circuit (40) comprising a compressor arrangement (54) driven by an electric motor (132) and an energy storage unit (58) for supplying energy for operating said refrigerant circuit (40),
wherein that said transport refrigeration system during a travelling period (TP) is used for loading and delivering said cargo (16) and during said travelling period (TP) said refrigerant circuit (40) is powered by said energy storage unit (58) in order to operate said refrigerant circuit (40) for maintaining a setpoint temperature (ST) within said storage volume (14), wherein said transport refrigeration system (10) during a rest period (RP) remains stationary in a charging location
wherein in said charging location said refrigeration circuit (40) is connected to and powered by a charger (200) connected to a local electrical grid for precooling said storage volume (14) to a setpoint temperature (ST) and for maintaining said setpoint temperature (ST) up to the end of the rest period (RP) and for charging said energy storage unit (58) for the next travelling period (TP) and in that a controller (120) determines the charge level of said energy storage unit (58) and calculates the required recharge energy (ERC) and further determines the temperature of the storage volume (14) and calculates the required precooling energy (EPC) and the required keep setpoint energy (EKSP) **characterized in that** said controller (120) uses a given price/time correlation (PTC) for the electric energy consumed within the remaining rest period (RP) for a price optimized timing of a recharge period (RP) for supplying the required recharge energy (ERC) and timing of a precooling period (PCP) for supplying the required precooling energy (EPC) and timing of a keep setpoint period (KSP) for supplying the required keep setpoint energy (EKSP).

13. Method according to claim 12, wherein the price/time correlation (PTC) defines a price for the energy consumed at the respective time (t) within the rest period (RP).

14. Method according to claim 12 or 13, wherein said precooling energy (EPC) is calculated by said controller (120) according to the difference between an actual temperature detected within storage volume (14) and the given setpoint temperature (ST) for the upcoming travelling period (TP) and a precooling factor (PF) associated with said storage volume (14).

15. Method according to one of claims 12 to 14, wherein said controller (120) based on the calculated precooling energy (EPC) and the power consumption of said refrigerant circuit (40) when operated for precooling calculates the minimum duration of a virtual precooling period (PPCP) necessary for running said refrigerant circuit (40) in order to achieve the setpoint temperature (ST) within said storage volume (14), in particular wherein the controller (120) arranges a plurality of said virtual precooling periods (VPCP) starting at different times within said rest period (RP), in particular wherein the plurality of virtual precooling periods (VPCP) within said rest period (RP) comprises virtual precooling periods (VACP) arranged in a time sequence of overlapping or non-overlapping virtual precooling periods (VCPCP).

16. Method according to one of claims 12 to 15, wherein the controller (120) calculates the virtual precooling energy costs for each of the virtual precooling periods (VPCP) on the basis of the price defined by the price/ time correlation (PTC) for the respective virtual precooling periods (VPCP).

17. Method according to one of claims 12 to 16, wherein said controller (120) associates with each of the virtual precooling periods (VPCP) within said rest period (RP) a corresponding virtual keep setpoint period (VKSP) extending from the end of the respective virtual precooling period (VPCP) to the end of said rest period (RP, in particular wherein the controller (120) determines the virtual keep setpoint energy (VEKS) for each of the virtual keep setpoint periods (VKSP) associated with a respective virtual precooling period (VPCP) on the basis of a keep setpoint factor (KSF) for the respective setpoint temperatures (ST) and the duration of the respective virtual keep setpoint period (VKSP), in particular wherein the controller (120) calculates the virtual keep setpoint energy costs for each of the virtual keep setpoint periods (VKSP) and of the price defined by the price/time correlation (PTC) for the respective virtual keep setpoint periods (VKSP).

18. Method according to claim 17, wherein the controller (120) calculates the total energy costs for each virtual precooling period (VPCP) and the associated virtual keep setpoint period (VKSP) and selects from the virtual precooling periods (VPCP) and the associated virtual keep setpoint periods (VKSP) the combination with the lowest total energy costs as the precooling period (PCP) and the associated keep setpoint period (KSP) to be used.

19. Method according to one of claims 12 to 18, wherein the price/time correlation (PTC) comprises subsequent pricing time intervals (PTI) arranged within the rest period (RP) within each pricing time interval (PTI) a constant price for the electric energy is defined, in particular wherein the pricing time intervals (PTI) have a duration longer than some minutes and shorter than some hours, and/or wherein in particular the pricing time intervals (PTI) have an identical duration, in particular wherein said controller (120) based on the calculated precooling energy (EPC) and the power consumption of said refrigerant circuit (40) when operated for precooling determines the minimum number of pricing time intervals (PTI) required for a virtual precooling period (VPCP) necessary for running said refrigerant circuit (40) in order to achieve the setpoint temperature (ST), in particular wherein said controller (120) calculates the costs of the virtual precooling energy (VEPC) on the basis of the costs associated with the respective pricing time intervals (PTI) incorporated by said virtual precooling period (VPCP), and/or wherein in particular the controller (120) associates with each of the virtual precooling periods (VPCP) within said rest period (RP) a corresponding virtual keep setpoint period (VKSP) comprising the pricing time intervals (PTI) between the end of the respective virtual precooling period (VPCP) and the end of said rest period (RP)., in particular wherein said controller (120) calculates the virtual keep setpoint costs associated with said respective virtual precooling periods (VPCP) on the basis of the pricing of the energy within said pricing time intervals (PTI) comprised by said virtual keep setpoint period (VKSP), and/or wherein in particular the controller (120) calculates the total energy costs for each virtual precooling periods (VPCP) and the associated virtual keep setpoint period (VKSP) and selects from the virtual precooling periods (VPCP) and the respective associated virtual keep setpoint period (VKSP) the combination with the lowest total energy costs as the precooling period (PCP) and the associated keep setpoint period (KSP) to be used.

20. Method according to one of claims 12 to 19, wherein the controller (120) calculates the recharge energy (ERC) based on the energy difference between charging stage of the energy storage unit (58) and a predefined charged stage of the energy storage unit (58), in particular wherein said predefined charged stage of said energy storage unit (58) can be a fully charged stage of said energy storage unit (58) or a partially charged stage of said energy storage (58) providing sufficient energy for operating said refrigerant circuit (40) in order to maintain said set point temperature (ST), in particular wherein said predefined charged stage is selected by an operator or the controller (120), in particular wherein the predefined charged stage is predicted on the basis of parameters of the upcoming travelling period (TP), in particular wherein the parameters of the upcoming travelling period (TP) are at least one of duration of said travelling period (TP) and warming up parameters of the insulated housing (12) which comprise for example conditions of ambient air or unloading or loading time periods of the cargo (16).

21. Method according to claim 20, wherein the controller (120) determines the charging stage of the energy storage unit (58) by detecting the energy consumed during each travelling period (TP), in particular wherein the controller (120) determines the energy consumed during the travelling period by a Coulomb counting device (196).

22. Method according to one of claims 20 or 21, wherein the controller (120) determines virtual recharge period (VRCP) within said rest period (RP) by subtracting from the maximum power available from the charger (200) the precooling power and the associated keep setpoint power to be consumed in the course of the precooling period (PCP) and the keep setpoint period (KSP) to determine the available recharge power and based on the recharge energy (ERC) and the available recharge power the controller (120) calculates the minimum duration of a virtual recharge period (VRCP) necessary for fully charging the energy storage unit (58), in particular wherein the controller (120) arranges a plurality of virtual recharge periods (VRCP) within said rest period (RP), in particular wherein the plurality of said virtual recharge periods (VRCP) within said rest period (RP) comprises virtual recharge periods (VRCP) arranged in a time sequence of overlapping or nonoverlapping virtual recharge periods (VRCP).

23. Method according to one of claims 12 to 22, wherein said controller (120) calculates the energy costs for each virtual recharge period (VRCP) according to the price for the energy to be consumed in the course of said respective virtual recharge period (VRCP) based on the stored price/time correlation (PTC) and selects the virtual recharge period (VRCP) with the lowest costs as the recharge period (RCP) to be used.

24. Method according to one of claims 20 to 23, wherein the controller (120) determines a virtual recharge period (VRCP) by selecting the minimum pricing time intervals (PCI) which are necessary for fully charging the energy storage unit (58) within said rest period (RP), in particular wherein controller (120) calculates the energy costs for each virtual recharge period (VRCP) according to the price for the energy within said pricing time intervals (PTI) used for charging said energy storage unit (58) during said respective virtual recharge period (VRCP) and selects the virtual recharge period (VRCP) with the lowest costs as the recharge period (RCP) to be used.

## Patentansprüche

1. Transportkühlsystem, insbesondere für eine Speichereinheit (10), mit einem Speichervolumen (14) für temperaturempfindliche Fracht (16) und einem Kühlmittelkreis (40) zum Kühlen des Speichervolumens (14), wobei der Kühlmittelkreis (40) eine von einem Elektromotor (132) angetriebene Verdichteranordnung (54) und eine Energiespeichereinheit (58) zum Zuführen von Energie für das Betreiben des Kühlmittelkreises (40) aufweist, wobei das Transportkühlsystem während einer Fahrtperiode (TP) zum Beladen und Ausliefern der Fracht (16) verwendet wird und während der Fahrtperiode (TP) der Kühlmittelkreis (40) von der Energiespeichereinheit (58) angetrieben wird, um den Kühlmittelkreis (40) zum Aufrechterhalten einer Sollwerttemperatur (ST) in dem Speichervolumen (14) zu betreiben, wobei das Transportkühlsystem (10) während einer Ruheperiode (RP) stationär in einer Ladestation verbleibt, wobei der Kühlmittelkreis (40) in der Ladestation mit einem an ein lokales Stromnetz angeschlossenen Ladegerät (200) zum Vorkühlen des Speichervolumens (14) auf eine Sollwerttemperatur (ST) und zum Aufrechterhalten der Sollwerttemperatur (ST) bis zum Ende der Ruheperiode (RP) und zum Laden der Energiespeichereinheit (58) für die nächste Fahrtperiode (TP) verbunden ist und mit Energie versorgt wird, und wobei eine Steuerung (120) den Ladezustand der Energiespeichereinheit (58) bestimmt und die benötigte Nachladeenergie (ERC) berechnet und die weiterhin die Temperatur des Speichervolumens (14) bestimmt und die erforderliche Vorkühlenergie (EPC) und die erforderliche Sollwert-Erhaltungsenergie (EKSP) berechnet, **dadurch gekennzeichnet, dass** die Steuerung (120) eine vorgegebene Preis-/Zeit-Korrelation (PTC) für die innerhalb der verbleibenden Ruheperiode (RP) verbrauchte elektrische Energie für einen preisoptimierten Zeitablauf einer Nachladeperiode (RP) zum Liefern der benötigten Nachladeenergie (ERC) und einen Zeitablauf einer Vorkühlperiode (PCP) zum Liefern der benötigten Vorkühlenergie (EPC) und einen Zeitablauf einer Sollwert-Erhaltungsperiode (KSP) zum Liefern der benötigten Sollwert-Erhaltungsenergie (EKSP) verwendet.

2. Transportkühlsystem nach Anspruch 1, bei dem die Preis-/Zeit-Korrelation (PTC) einen Preis für die zu der jeweiligen Zeit (t) innerhalb der Ruheperiode (RP) verbrauchte Energie festlegt.

3. Transportkühlsystem nach Anspruch 1 oder 2, bei dem die Vorkühlenergie (EPC) von der Steuerung (120) entsprechend der Differenz zwischen einer in dem Speichervolumen (14) erfassten Istwerttemperatur und der vorgegebenen Sollwerttemperatur (ST) für die bevorstehende Fahrtperiode (TP) und einem dem Speichervolumen (14) zugeordneten Vorkühlfaktor (PF) berechnet wird.

4. Transportkühlsystem nach einem der vorhergehenden Ansprüche, bei dem die Steuerung (120) auf der Grundlage der berechneten Vorkühlenergie (EPC) und des Stromverbrauchs des Kühlmittelkreises (40), wenn er für das Vorkühlen betrieben wird, die Mindestdauer einer virtuellen Vorkühlperiode (PPCP), die für das Betreiben des Kühlmittelkreises (40) erforderlich ist, um die Sollwerttemperatur (ST) innerhalb des Speichervolumens (14) zu erreichen, berechnet, wobei insbesondere die Steuerung (120) eine Mehrzahl der virtuellen Vorkühlperioden (VPCP), die zu unterschiedlichen Zeitpunkten innerhalb der Ruheperiode (RP) beginnen, anordnet, wobei insbesondere die Mehrzahl virtueller Vorkühlperioden (VPCP) innerhalb der Ruheperiode (RP) virtuelle Vorkühlperioden (VACP) aufweist, die in einer zeitlichen Reihenfolge von sich überlappenden oder sich nicht überlappenden virtuellen Vorkühlperioden (VCPCP) angeordnet sind.

5. Transportkühlsystem nach Anspruch 4, bei dem die Steuerung (120) die virtuellen Vorkühlenergiekosten für jede der virtuellen Vorkühlperioden (VPCP) auf der Grundlage des durch die Preis-/Zeitkorrelation (PTC) für die jeweiligen virtuellen Vorkühlperioden (VPCP) festgelegten Preises berechnet.

6. Transportkühlsystem nach einem der Ansprüche 4 bis 5, bei dem die Steuerung (120) jeder der virtuellen Vorkühlperioden (VPCP) innerhalb der Ruheperiode (RP) eine entsprechende virtuelle Sollwert-Erhaltungsperiode (VKSP) zuordnet, die sich von dem Ende der jeweiligen virtuellen Vorkühlperiode (VPCP) bis zu dem Ende der Ruheperiode (RP) erstreckt, wobei insbesondere die Steuerung (120) die virtuelle Sollwert-Erhaltungsenergie (VEKS) für jede der virtuellen Sollwert-Erhaltungsperioden (VKSP), die einer jeweiligen virtuellen Vorkühlperiode (VPCP) zugeordnet sind, auf der Grundlage eines Sollwert-Erhaltungsfaktors (KSF) für die jeweiligen Sollwerttemperaturen (ST) und die Dauer der jeweiligen virtuellen Sollwert-Erhaltungsperiode (VKSP) bestimmt, wobei insbesondere die Steuerung (120) die virtuellen Sollwert-Erhaltungsenergiekosten für jede der virtuellen Sollwert-Erhaltungsperioden (VKSP) und den durch die Preis-/Zeitkorrelation (PTC) für die jeweiligen virtuellen Sollwert-Erhaltungsperioden (VKSP) definierten Preis berechnet, wobei insbesondere die Steuerung (120) die Gesamtenergiekosten für jede virtuelle Vorkühlperiode (VPCP) und die zugeordnete virtuelle Sollwert-Erhaltungsperiode (VKSP) berechnet und aus den virtuellen Vorkühlperioden (VPCP) und den zugeordneten virtuellen Sollwert-Erhaltungsperioden (VKSP) die Kombination mit den niedrigsten Gesamtenergiekosten als die Vorkühlperiode (PCP) und die zu verwendende zugeordnete Sollwert-Erhaltungsperiode (KSP) auswählt.

7. Transportkühlsystem nach einem der vorhergehenden Ansprüche, bei dem die Preis-/Zeitkorrelation (PTC) aufeinanderfolgende Preis-Zeitintervalle (PTI) aufweist, die innerhalb der Ruhezeit (RP) angeordnet sind, wobei innerhalb jedes Preis-Zeitintervalls (PTI) ein konstanter Preis für die elektrische Energie festgelegt ist, wobei insbesondere die Preis-Zeitintervalle (PTI) eine Dauer aufweisen, die länger als einige Minuten und kürzer als einige Stunden sind, und/oder wobei insbesondere die Preis-Zeitintervalle (PTI) eine gleiche Dauer haben, und/oder wobei insbesondere die Steuerung (120) auf der Grundlage der berechneten Vorkühlenergie (EPC) und des Stromverbrauchs des Kühlmittelkreises (40), wenn er zum Zweck des Vorkühlens betrieben wird, die Mindestanzahl von Preis-Zeitintervallen (PTI) bestimmt, die für eine virtuelle Vorkühlperiode (VPCP) erforderlich sind, die für das Betreiben des Kühlmittelkreises (40) notwendig sind, um die Sollwerttemperatur (ST) zu erreichen, wobei insbesondere die Steuerung (120) die Kosten der virtuellen Vorkühlenergie (VEPC) auf der Grundlage der Kosten berechnet, die den jeweiligen Preis-Zeitintervallen (PTI) zugeordnet sind, die durch die virtuelle Vorkühlperiode (VPCP) einbezogen sind.

8. Transportkühlsystem nach Anspruch 7, bei dem die Steuerung (120) jeder der virtuellen Vorkühlperioden (VPCP) innerhalb der Ruheperiode (RP) eine entsprechende virtuelle Sollwert-Erhaltungsperiode (VKSP) zuordnet, die die Preis-Zeitintervalle (PTI) zwischen dem Ende der jeweiligen virtuellen Vorkühlperiode (VPCP) und dem Ende der Ruheperiode (RP) beinhaltet, wobei insbesondere die Steuerung (120) die virtuellen Sollwert-Erhaltungskosten, die den jeweiligen virtuellen Vorkühlperioden (VPCP) zugeordnet sind, auf der Grundlage der Energiepreise innerhalb der Preis-Zeitintervalle (PTI) berechnet, die aus der virtuellen Sollwert-Erhaltungsperiode (VKSP) bestehen, und/oder wobei insbesondere die Steuerung (120) die Gesamtenergiekosten für jede virtuelle Vorkühlperiode (VPCP) und die zugeordnete virtuelle Sollwert-Erhaltungsperiode (VKSP) berechnet und aus den virtuellen Vorkühlperioden (VPCP) und der jeweils zugeordneten virtuellen Sollwert-Erhaltungsperiode (VKSP) die Kombination mit den niedrigsten Gesamtenergiekosten als Vorkühlperiode (PCP) und die zu verwendende zugeordnete Sollwert-Erhaltungsperiode (KSP) auswählt.

9. Transportkühlsystem nach einem der vorhergehenden Ansprüche, bei dem die Steuerung (120) die Nachladeenergie (ERC) auf der Grundlage der Energiedifferenz zwischen dem Ladezustand der Energiespeichereinheit (58) und einem vordefinierten geladenen Zustand der Energiespeichereinheit (58) berechnet, wobei insbesondere der vordefinierte geladene Zustand der Energiespeichereinheit (58) ein vollständig geladener Zustand der Energiespeichereinheit (58) oder ein teilweise geladener Zustand der Energiespeichereinheit (58) sein kann, welcher ausreichend Energie zum Betreiben des Kühlmittelkreises (40) bereitstellt, um die Sollwerttemperatur (ST) aufrechtzuerhalten, wobei insbesondere der vordefinierte geladene Zustand durch einen Bediener oder die Steuerung (120) ausgewählt wird, wobei insbesondere der vordefinierte geladene Zustand auf der Grundlage von Parametern der bevorstehenden Fahrtperiode (TP) vorhergesagt wird, wobei insbesondere die Parameter der bevorstehenden Fahrtperiode (TP) wenigstens einer aus der Dauer der Fahrtperiode (TP) und aus den Aufwärmparametern des isolierten Gehäuses (12), die beispielsweise Gegebenheiten der Umgebungsluft oder der Entlade- oder Beladezeitperioden der Fracht (16) beinhalten, sind, und/oder wobei insbesondere die Steuerung (120) den Ladezustand der Energiespeichereinheit (58) bestimmt, indem sie die während jeder Fahrtperiode (TP) verbrauchte Energie erfasst, wobei insbesondere die Steuerung (120) die während der Fahrtperiode (TP) verbrauchte Energie anhand eines Coulomb-Zählgeräts (196) bestimmt.

10. Transportkühlsystem nach Anspruch 9, bei dem die Steuerung (120) eine virtuelle Nachladeperiode (VRCP) innerhalb der Ruheperiode (RP) bestimmt, indem sie von der maximal von dem Ladegerät (200) verfügbaren Leistung die Vorkühlleistung und die zugeordnete Sollwert-Erhaltungsleistung, die im Verlauf der Vorkühlperiode (PCP) und der Sollwert-Erhaltungsperiode (KSP) verbraucht werden, abzieht, um die verfügbare Nachladeleistung zu ermitteln, und bei der die Steuerung (120) auf der Grundlage der Nachladeenergie (ERC) und der verfügbaren Nachladeleistung die Mindestdauer einer virtuellen Nachladeperiode (VRCP) berechnet, die zum vollständigen Laden der Energiespeichereinheit (58) erforderlich ist, wobei insbesondere die Steuerung (120) innerhalb der Ruhezeit (RP) eine Mehrzahl virtueller Nachladeperioden (VRCP) einrichtet, wobei insbesondere die Mehrzahl virtueller Nachladeperioden (VRCP) innerhalb der Ruheperiode (RP) virtuelle Nachladeperioden (VRCP) beinhaltet, die in einer zeitlichen Abfolge von sich überlappenden oder sich nicht überlappenden virtuellen Nachladeperioden (VRCP) angeordnet sind, und/oder wobei insbesondere die Steuerung (120) die Energiekosten für jede virtuelle Nachladeperiode (VRCP) entsprechend dem Preis für die während der jeweiligen virtuellen Nachladeperiode (VRCP) zu verbrauchende Energie auf der Grundlage der gespeicherten Preis-/Zeitkorrelation (PTC) berechnet und die virtuelle Nachladeperiode (VRCP) mit den niedrigsten Kosten als die zu verwendende Nachladeperiode (RCP) auswählt.

11. Transportkühlsystem nach einem der Ansprüche 9 oder 10, bei dem die Steuerung (120) eine virtuelle Nachladeperiode (VRCP) bestimmt, indem sie die Minimum-Preis-Zeitintervalle (PCI) auswählt, die für das vollständige Laden der Energiespeichereinheit (58) innerhalb der Ruheperiode (RP) erforderlich sind, wobei insbesondere die Steuerung (120) die Energiekosten für jede virtuelle Nachladeperiode (VRCP) entsprechend dem Preis für die Energie innerhalb der Preis-Zeitintervalle (PTI) berechnet, die zum Laden der Energiespeichereinheit (58) während der jeweiligen virtuellen Nachladeperiode (VRCP) verwendet wird, und die virtuelle Nachladeperiode (VRCP) mit den niedrigsten Kosten als die zu verwendende Nachladeperiode (RCP) auswählt.

12. Verfahren zum Betreiben eines Transportkühlsystems, insbesondere einer eine Speichereinheit (10), mit einem Speichervolumen (14) für temperaturempfindliche Fracht (16) und einem Kühlmittelkreis (40) zum Kühlen des Speichervolumens (14), wobei der Kühlmittelkreis (40) eine von einem Elektromotor (132) angetriebene Verdichteranordnung (54) und eine Energiespeichereinheit (58) zum Zuführen von Energie zum Betreiben des Kühlmittelkreises (40) aufweist,
wobei das Transportkühlsystem während einer Fahrtperiode (TP) zum Beladen und Ausliefern der Fracht (16) verwendet wird und während der Fahrtperiode (TP) der Kühlmittelkreis (40) von der Energiespeichereinheit (58) angetrieben wird, um den Kühlmittelkreis (40) zum Aufrechterhalten einer Sollwerttemperatur (ST) in dem Speichervolumen (14) zu betreiben, wobei das Transportkühlsystem (10) während einer Ruheperiode (RP) stationär in einer Ladestation verbleibt, wobei der Kühlmittelkreis (40) in der Ladestation mit einem an ein lokales Stromnetz angeschlossenen Ladegerät (200) zum Vorkühlen des Speichervolumens (14) auf eine Sollwerttemperatur (ST) und zum Aufrechterhalten der Sollwerttemperatur (ST) bis zum Ende der Ruheperiode (RP) und zum Laden der Energiespeichereinheit (58) für die nächste Fahrtperiode (TP) verbunden ist und mit Energie versorgt wird, und wobei eine Steuerung (120) den Ladezustand der Energiespeichereinheit (58) bestimmt und die benötigte Nachladeenergie (ERC) berechnet und die weiterhin die Temperatur des Speichervolumens (14) bestimmt und die erforderliche Vorkühlenergie (EPC) und die erforderliche Sollwert-Erhaltungsenergie (EKSP) berechnet, **dadurch gekennzeichnet, dass** die Steuerung (120) eine vorgegebene Preis-/Zeit-Korrelation (PTC) für die innerhalb der verbleibenden Ruheperiode (RP) verbrauchte elektrische Energie für einen preisoptimierten Zeitablauf einer Nachladeperiode (RP) zum Liefern der benötigten Nachladeenergie (ERC) und einen Zeitablauf einer Vorkühlperiode (PCP) zum Liefern der benötigten Vorkühlenergie (EPC) und einen Zeitablauf einer Sollwert-Erhaltungsperiode (KSP) zum Liefern der benötigten Sollwert-Erhaltungsenergie (EKSP) verwendet.

13. Verfahren nach Anspruch 12, bei dem die Preis-/Zeitkorrelation (PTC) einen Preis für die zu dem jeweiligen Zeitpunkt (t) innerhalb der Ruheperiode (RP) verbrauchte Energie festlegt.

14. Verfahren nach Anspruch 12 oder 13, bei dem die Vorkühlenergie (EPC) von der Steuerung (120) entsprechend der Differenz zwischen einer im Speichervolumen (14) erfassten Istwerttemperatur und der vorgegebenen Sollwerttemperatur (ST) für die bevorstehende Fahrtperiode (TP) sowie einem dem Speichervolumen (14) zugeordneten Vorkühlfaktor (PF) berechnet wird.

15. Verfahren nach einem der Ansprüche 12 bis 14, bei dem die Steuerung (120) auf der Grundlage der berechneten Vorkühlenergie (EPC) und des Stromverbrauchs des Kühlmittelkreises (40), wenn er für das Vorkühlen betrieben wird, die Mindestdauer einer virtuellen Vorkühlperiode (PPCP), die für das Betreiben des Kühlmittelkreises (40) erforderlich ist, um die Sollwerttemperatur (ST) innerhalb des Speichervolumens (14) zu erreichen, berechnet, wobei insbesondere die Steuerung (120) eine Mehrzahl der virtuellen Vorkühlperioden (VPCP), die zu unterschiedlichen Zeitpunkten innerhalb der Ruheperiode (RP) beginnen, anordnet, wobei insbesondere die Mehrzahl virtueller Vorkühlperioden (VPCP) innerhalb der Ruheperiode (RP) virtuelle Vorkühlperioden (VACP) aufweist, die in einer zeitlichen Reihenfolge von sich überlappenden oder sich nicht überlappenden virtuellen Vorkühlperioden (VCPCP) angeordnet sind.

16. Verfahren nach einem der Ansprüche 12 bis 15, bei dem die Steuerung (120) die virtuellen Vorkühlenergiekosten für jede der virtuellen Vorkühlperioden (VPCP) auf der Grundlage des durch die Preis-/Zeitkorrelation (PTC) für die jeweiligen virtuellen Vorkühlperioden (VPCP) festgelegten Preises berechnet.

17. Verfahren nach einem der Ansprüche 12 bis 16, bei dem die Steuerung (120) jeder der virtuellen Vorkühlperioden (VPCP) innerhalb der Ruheperiode (RP) eine entsprechende virtuelle Sollwert-Erhaltungsperiode (VKSP) zuordnet, die sich von dem Ende der jeweiligen virtuellen Vorkühlperiode (VPCP) bis zu dem Ende der Ruheperiode (RP) erstreckt, wobei insbesondere die Steuerung (120) die virtuelle Sollwert-Erhaltungsenergie (VEKS) für jede der virtuellen Sollwert-Erhaltungsperioden (VKSP), die einer jeweiligen virtuellen Vorkühlperiode (VPCP) zugeordnet sind, auf der Grundlage eines Sollwert-Erhaltungsfaktors (KSF) für die jeweiligen Sollwerttemperaturen (ST) und die Dauer der jeweiligen virtuellen Sollwert-Erhaltungsperiode (VKSP) bestimmt, wobei insbesondere die Steuerung (120) die virtuellen Sollwert-Erhaltungsenergiekosten für jede der virtuellen Sollwert-Erhaltungsperioden (VKSP) und den durch die Preis-/Zeitkorrelation (PTC) für die jeweiligen virtuellen Sollwert-Erhaltungsperioden (VKSP) definierten Preis berechnet.

18. Verfahren nach Anspruch 17, bei dem die Steuerung (120) die Gesamtenergiekosten für jede virtuelle Vorkühlperiode (VPCP) und die zugeordnete virtuelle Sollwert-Erhaltungsperiode (VKSP) berechnet und aus den virtuellen Vorkühlperioden (VPCP) und den zugeordneten virtuellen Sollwert-Erhaltungsperioden (VKSP) die Kombination mit den niedrigsten Gesamtenergiekosten als die Vorkühlperiode (PCP) und die zu verwendende zugeordnete Sollwert-Erhaltungsperiode (KSP) auswählt.

19. Verfahren nach einem der Ansprüche 12 bis 18, bei dem die Preis-/Zeitkorrelation (PTC) aufeinanderfolgende Preis-Zeitintervalle (PTI) aufweist, die innerhalb der Ruhezeit (RP) angeordnet sind, wobei innerhalb jedes Preis-Zeitintervalls (PTI) ein konstanter Preis für die elektrische Energie festgelegt ist, wobei insbesondere die Preis-Zeitintervalle (PTI) eine Dauer aufweisen, die länger als einige Minuten und kürzer als einige Stunden sind, und/oder wobei insbesondere die Preis-Zeitintervalle (PTI) eine gleiche Dauer haben, wobei insbesondere die Steuerung (120) auf der Grundlage der berechneten Vorkühlenergie (EPC) und des Stromverbrauchs des Kühlmittelkreises (40), wenn er zum Zweck des Vorkühlens betrieben wird, die Mindestanzahl von Preis-Zeitintervallen (PTI) bestimmt, die für eine virtuelle Vorkühlperiode (VPCP) erforderlich sind, die für das Betreiben des Kühlmittelkreises (40) notwendig sind, um die Sollwerttemperatur (ST) zu erreichen, wobei insbesondere die Steuerung (120) die Kosten der virtuellen Vorkühlenergie (VEPC) auf der Grundlage der Kosten berechnet, die den jeweiligen Preis-Zeitintervallen (PTI) zugeordnet sind, die durch die virtuelle Vorkühlperiode (VPCP) einbezogen sind, und/oder bei dem insbesondere die Steuerung (120) jeder der virtuellen Vorkühlperioden (VPCP) innerhalb der Ruheperiode (RP) eine entsprechende virtuelle Sollwert-Erhaltungsperiode (VKSP) zuordnet, die die Preis-Zeitintervalle (PTI) zwischen dem Ende der jeweiligen virtuellen Vorkühlperiode (VPCP) und dem Ende der Ruheperiode (RP) beinhaltet, wobei insbesondere die Steuerung (120) die virtuellen Sollwert-Erhaltungskosten, die den jeweiligen virtuellen Vorkühlperioden (VPCP) zugeordnet sind, auf der Grundlage der Energiepreise innerhalb der Preis-Zeitintervalle (PTI) berechnet, die aus der virtuellen Sollwert-Erhaltungsperiode (VKSP) bestehen, und/oder wobei insbesondere die Steuerung (120) die Gesamtenergiekosten für jede virtuelle Vorkühlperiode (VPCP) und die zugeordnete virtuelle Sollwert-Erhaltungsperiode (VKSP) berechnet und aus den virtuellen Vorkühlperioden (VPCP) und der jeweils zugeordneten virtuellen Sollwert-Erhaltungsperiode (VKSP) die Kombination mit den niedrigsten Gesamtenergiekosten als Vorkühlperiode (PCP) und die zu verwendende zugeordnete Sollwert-Erhaltungsperiode (KSP) auswählt.

20. Verfahren nach einem der Ansprüche 12 bis 19, bei dem die Steuerung (120) die Nachladeenergie (ERC) auf der Grundlage der Energiedifferenz zwischen dem Ladezustand der Energiespeichereinheit (58) und einem vordefinierten geladenen Zustand der Energiespeichereinheit (58) berechnet, wobei insbesondere der vordefinierte geladene Zustand der Energiespeichereinheit (58) ein vollständig geladener Zustand der Energiespeichereinheit (58) oder ein teilweise geladener Zustand der Energiespeichereinheit (58) sein kann, welcher ausreichend Energie zum Betreiben des Kühlmittelkreises (40) bereitstellt, um die Sollwerttemperatur (ST) aufrechtzuerhalten, wobei insbesondere der vordefinierte geladene Zustand durch einen Bediener oder die Steuerung (120) ausgewählt wird, wobei insbesondere der vordefinierte geladene Zustand auf der Grundlage von Parametern der bevorstehenden Fahrtperiode (TP) vorhergesagt wird, wobei insbesondere die Parameter der bevorstehenden Fahrtperiode (TP) wenigstens einer aus der Dauer der Fahrtperiode (TP) und aus den Aufwärmparametern des isolierten Gehäuses (12), die beispielsweise Gegebenheiten der Umgebungsluft oder der Entlade- oder Beladezeitperioden der Fracht (16) beinhalten, sind.

21. Verfahren nach Anspruch 20, bei dem die Steuerung (120) den Ladezustand der Energiespeichereinheit (58) bestimmt, indem sie die während jeder Fahrtperiode (TP) verbrauchte Energie erfasst, wobei insbesondere die Steuerung (120) die während der Fahrtperiode (TP) verbrauchte Energie anhand eines Coulomb-Zählgeräts (196) bestimmt.

22. Verfahren nach einem der Ansprüche 20 oder 21, bei dem die Steuerung (120) eine virtuelle Nachladeperiode (VRCP) innerhalb der Ruheperiode (RP) bestimmt, indem sie von der maximal von dem Ladegerät (200) verfügbaren Leistung die Vorkühlleistung und die zugeordnete Sollwert-Erhaltungsleistung, die im Verlauf der Vorkühlperiode (PCP) und der Sollwert-Erhaltungsperiode (KSP) verbraucht werden, abzieht, um die verfügbare Nachladeleistung zu ermitteln, und bei der die Steuerung (120) auf der Grundlage der Nachladeenergie (ERC) und der verfügbaren Nachladeleistung die Mindestdauer einer virtuellen Nachladeperiode (VRCP) berechnet, die zum vollständigen Laden der Energiespeichereinheit (58) erforderlich ist, wobei insbesondere die Steuerung (120) innerhalb der Ruhezeit (RP) eine Mehrzahl virtueller Nachladeperioden (VRCP) einrichtet, wobei insbesondere die Mehrzahl virtueller Nachladeperioden (VRCP) innerhalb der Ruheperiode (RP) virtuelle Nachladeperioden (VRCP) beinhaltet, die in einer zeitlichen Abfolge von sich überlappenden oder sich nicht überlappenden virtuellen Nachladeperioden (VRCP) angeordnet sind.

23. Verfahren nach einem der Ansprüche 12 bis 22, bei dem die Steuerung (120) die Energiekosten für jede virtuelle Nachladeperiode (VRCP) entsprechend dem Preis für die während der jeweiligen virtuellen Nachladeperiode (VRCP) zu verbrauchende Energie auf der Grundlage der gespeicherten Preis-/Zeitkorrelation (PTC) berechnet und die virtuelle Nachladeperiode (VRCP) mit den niedrigsten Kosten als die zu verwendende Nachladeperiode (RCP) auswählt.

24. Verfahren nach einem der Ansprüche 20 bis 23, bei dem die Steuerung (120) eine virtuelle Nachladeperiode (VRCP) bestimmt, indem sie die Minimum-Preis-Zeitintervalle (PCI) auswählt, die für das vollständige Laden der Energiespeichereinheit (58) innerhalb der Ruheperiode (RP) erforderlich sind, wobei insbesondere die Steuerung (120) die Energiekosten für jede virtuelle Nachladeperiode (VRCP) entsprechend dem Preis für die Energie innerhalb der Preis-Zeitintervalle (PTI) berechnet, die zum Laden der Energiespeichereinheit (58) während der jeweiligen virtuellen Nachladeperiode (VRCP) verwendet wird, und die virtuelle Nachladeperiode (VRCP) mit den niedrigsten Kosten als die zu verwendende Nachladeperiode (RCP) auswählt.

## Revendications

1. Système de réfrigération de transport, en particulier pour une unité de stockage (10), comprenant un volume de stockage (14) pour des marchandises sensibles à la température (16) et un circuit de réfrigérant (40) pour refroidir ledit volume de stockage (14), ledit circuit de réfrigérant (40) comprenant un agencement de compresseur (54) entraîné par un moteur électrique (132) et une unité de stockage d'énergie (58) pour fournir de l'énergie afin de faire fonctionner ledit circuit de réfrigérant (40), dans lequel ledit système de réfrigération de transport pendant une période de déplacement (TP) est utilisé pour charger et livrer lesdites marchandises (16) et, pendant ladite période de déplacement (TP), ledit circuit de réfrigérant (40) est alimenté par ladite unité de stockage d'énergie (58) afin de faire fonctionner ledit circuit de réfrigérant (40) pour maintenir une température de consigne (ST) à l'intérieur dudit volume de stockage (14), dans lequel ledit système de réfrigération de transport (10) reste stationnaire pendant une période de repos (RP) dans un emplacement de charge, dans lequel dans ledit emplacement de charge, ledit circuit de réfrigérant (40) est connecté à et alimenté par un chargeur (200) connecté à un réseau électrique local pour prérefroidir ledit volume de stockage (14) à une température de consigne (ST) et pour maintenir ladite température de consigne (ST) jusqu'à la fin de la période de repos (RP) et pour charger ladite unité de stockage d'énergie (58) pour la période de déplacement (TP) suivante et en ce qu'un dispositif de commande (120) détermine le niveau de charge de ladite unité de stockage d'énergie (58) et calcule l'énergie de recharge nécessaire (ERC) et détermine en outre la température du volume de stockage (14) et calcule l'énergie de prérefroidissement requise (EPC) et l'énergie de consigne de maintien requise (EKSP),
**caractérisé**
**en ce que** ledit dispositif de commande (120) utilise une corrélation prix/temps (PTC) donnée pour l'énergie électrique consommée au cours de la période de repos (RP) restante pour une synchronisation optimisée en termes de prix d'une période de recharge (RP) pour fournir l'énergie de recharge requise (ERC) et une synchronisation d'une période de prérefroidissement (PCP) pour fournir l'énergie de prérefroidissement requise (EPC) et une synchronisation d'une période de consigne de maintien (KSP) pour fournir l'énergie de consigne de maintien requise (EKSP).

2. Système de réfrigération de transport selon la revendication 1, dans lequel la corrélation prix/temps (PTC) définit un prix pour l'énergie consommée à l'instant (t) respectif au cours de la période de repos (RP).

3. Système de réfrigération de transport selon la revendication 1 ou 2, dans lequel ladite énergie de prérefroidissement (EPC) est calculée par ledit dispositif de commande (120) en fonction de la différence entre une température réelle détectée à l'intérieur du volume de stockage (14) et la température de consigne (ST) donnée pour la période de déplacement (TP) à venir et un facteur de prérefroidissement (PF) associé audit volume de stockage (14).

4. Système de réfrigération de transport selon l'une des revendications précédentes, dans lequel ledit dispositif de commande (120) sur la base de l'énergie de prérefroidissement (EPC) calculée et de la consommation électrique dudit circuit de réfrigérant (40), lorsqu'il est exploité pour le prérefroidissement, calcule la durée minimale d'une période de prérefroidissement virtuel (PPCP) nécessaire au fonctionnement dudit circuit de réfrigérant (40) afin d'atteindre la température de consigne (ST) à l'intérieur dudit volume de stockage (14), en particulier dans lequel le dispositif de commande (120) agence une pluralité desdites périodes de prérefroidissement virtuel (VPCP) commençant à différents instants au cours de ladite période de repos (RP), en particulier dans lequel la pluralité de périodes de prérefroidissement virtuel (VPCP) au cours de ladite période de repos (RP) comprend des périodes de prérefroidissement virtuel (VACP) agencées dans une séquence temporelle de périodes de prérefroidissement virtuel (VCPCP) se chevauchant ou non.

5. Système de réfrigération de transport selon la revendication 4, dans lequel le dispositif de commande (120) calcule les coûts énergétiques de prérefroidissement virtuel pour chacune des périodes de prérefroidissement virtuel (VPCP) sur la base du prix défini par la corrélation prix/temps (PTC) pour les périodes de prérefroidissement virtuel (VPCP) respectives.

6. Système de réfrigération de transport selon l'une des revendications 4 à 5, dans lequel ledit dispositif de commande (120) associe à chacune des périodes de prérefroidissement virtuel (VPCP) au cours de ladite période de repos (RP) une période de consigne de maintien virtuel (VKSP) correspondante s'étendant de la fin de la période de prérefroidissement virtuel (VPCP) respective à la fin de ladite période de repos (RP), en particulier dans lequel le dispositif de commande (120) détermine l'énergie de consigne de maintien virtuel (VEKS) pour chacune des périodes de consigne de maintien virtuel (VKSP) associé à une période de prérefroidissement virtuel (VPCP) respective sur la base d'un facteur de consigne de maintien (KSF) pour les températures de consigne (ST) respectives et de la durée de la période de consigne de maintien virtuel (VKSP) respective, en particulier dans lequel le dispositif de commande (120) calcule les coûts énergétiques de consigne de maintien virtuel pour chacune des périodes de consigne de maintien virtuel (VKSP) et du prix défini par la corrélation prix/temps (PTC) pour les périodes de consigne de maintien virtuel (VKSP) respectives, en particulier dans lequel le dispositif de commande (120) calcule les coûts énergétiques totaux pour chaque période de prérefroidissement virtuel (VPCP) et la période de consigne de maintien virtuel (VKSP) associée et sélectionne parmi les périodes de prérefroidissement virtuel (VPCP) et les périodes de consigne de maintien virtuel (VKSP) associées la combinaison avec les coûts énergétiques totaux les plus faibles comme période de prérefroidissement (PCP) et période de consigne de maintien (KSP) associée à utiliser.

7. Système de réfrigération de transport selon l'une des revendications précédentes, dans lequel la corrélation prix/temps (PTC) comprend des intervalles de temps de tarification (PTI) ultérieurs agencés au cours de la période de repos (RP) dans chaque intervalle de temps de tarification (PTI), un prix constant pour l'énergie électrique est défini, en particulier, dans lequel les intervalles de temps de tarification (PTI) ont une durée supérieure à quelques minutes et inférieure à quelques heures, et/ou dans lequel en particulier les intervalles de temps de tarification (PTI) ont une durée identique, et/ou dans lequel en particulier ledit dispositif de commande (120), sur la base de l'énergie de prérefroidissement (EPC) calculée et de la consommation électrique dudit circuit de réfrigérant (40), lorsqu'il est exploité pour le prérefroidissement, détermine le nombre minimal d'intervalles de temps de tarification (PTI) nécessaires pour une période de prérefroidissement virtuel (VPCP) nécessaire au fonctionnement dudit circuit de réfrigérant (40) afin d'atteindre la température de consigne (ST), en particulier dans lequel ledit dispositif de commande (120) calcule les coûts de l'énergie de prérefroidissement virtuel (VEPC) sur la base des coûts associés aux intervalles de temps de tarification (PTI) respectifs incorporés par ladite période de prérefroidissement virtuel (VPCP).

8. Système de réfrigération de transport selon la revendication 7, dans lequel le dispositif de commande (120) associe à chacune des périodes de prérefroidissement virtuel (VPCP) au cours de ladite période de repos (RP) une période de consigne de maintien virtuel (VKSP) correspondante comprenant les intervalles de temps de tarification (PTI) entre la fin de la période de prérefroidissement virtuel (VPCP) respective et la fin de ladite période de repos (RP), en particulier dans lequel ledit dispositif de commande (120) calcule les coûts de consigne de maintien virtuel associés auxdites périodes de prérefroidissement virtuel (VPCP) respectives sur la base de la tarification de l'énergie dans lesdits intervalles de temps de tarification (PTI) compris par ladite période de consigne de maintien virtuel (VKSP), et/ou dans lequel en particulier le dispositif de commande (120) calcule les coûts énergétiques totaux pour chaque période de prérefroidissement virtuel (VPCP) et la période de consigne de maintien virtuel (VKSP) associée et sélectionne parmi les périodes de prérefroidissement virtuel (VPCP) et la période de consigne de maintien virtuel (VKSP) associée respective, la combinaison avec les coûts énergétiques totaux les plus faibles comme période de prérefroidissement (PCP) et période de consigne de maintien (KSP) associée à utiliser.

9. Système de réfrigération de transport selon l'une des revendications précédentes, dans lequel le dispositif de commande (120) calcule l'énergie de recharge (ERC) sur la base de la différence d'énergie entre l'étape de charge de l'unité de stockage d'énergie (58) et une étape de charge prédéfinie de l'unité de stockage d'énergie (58), en particulier dans lequel ladite étape de charge prédéfinie de ladite unité de stockage d'énergie (58) peut être une étape de charge complète de ladite unité de stockage d'énergie (58) ou une étape de charge partielle de ladite unité de stockage d'énergie (58) fournissant une énergie suffisante pour faire fonctionner ledit circuit de réfrigérant (40) afin de maintenir ladite température de consigne (ST), en particulier dans lequel ladite étape de charge prédéfinie est sélectionnée par un opérateur ou le dispositif de commande (120), en particulier dans lequel l'étape de charge prédéfinie est prédite sur la base de paramètres de la période de déplacement (TP) à venir, en particulier dans lequel les paramètres de la période de déplacement (TP) à venir sont au moins l'un parmi la durée de ladite période de déplacement (TP) et des paramètres de chauffage du logement isolé (12) qui comprennent par exemple des conditions d'air ambiant ou des périodes de temps de déchargement ou de chargement des marchandises (16), et/ou dans lequel en particulier le dispositif de commande (120) détermine l'étape de charge de l'unité de stockage d'énergie (58) en détectant l'énergie consommée pendant chaque période de déplacement (TP), en particulier dans lequel le dispositif de commande (120) détermine l'énergie consommée pendant la période de déplacement au moyen d'un compteur coulométrique (196).

10. Système de réfrigération de transport selon la revendication 9, dans lequel le dispositif de commande (120) détermine une période de recharge virtuelle (VRCP) au cours de ladite période de repos (RP) en soustrayant de la puissance maximale disponible du chargeur (200) la puissance de prérefroidissement et la puissance de consigne de maintien associée à consommer au cours de la période de prérefroidissement (PCP) et de la période de consigne de maintien (KSP) pour déterminer la puissance de recharge disponible et, sur la base de l'énergie de recharge (ERC) et de la puissance de recharge disponible, le dispositif de commande (120) calcule la durée minimale d'une période de recharge virtuelle (VRCP) nécessaire pour charger complètement l'unité de stockage d'énergie (58), en particulier dans lequel le dispositif de commande (120) agence une pluralité de périodes de recharge virtuelle (VRCP) au cours de ladite période de repos (RP), en particulier dans lequel la pluralité desdites périodes de recharge virtuelle (VRCP) au cours de ladite période de repos (RP) comprend des périodes de recharge virtuelle (VRCP) agencées dans une séquence temporelle de périodes de recharge virtuelle (VRCP) se chevauchant ou non, et/ou dans lequel en particulier ledit dispositif de commande (120) calcule les coûts énergétiques pour chaque période de recharge virtuelle (VRCP) en fonction du prix de l'énergie à consommer au cours de ladite période de recharge virtuelle (VRCP) respective sur la base de la corrélation prix/temps (PTC) stockée et sélectionne la période de recharge virtuelle (VRCP) avec les coûts les plus faibles comme période de recharge (RCP) à utiliser.

11. Système de réfrigération de transport selon l'une des revendications 9 ou 10, dans lequel le dispositif de commande (120) détermine une période de recharge virtuelle (VRCP) en sélectionnant les intervalles de temps de tarification minimaux (PCI) qui sont nécessaires pour charger complètement l'unité de stockage d'énergie (58) au cours de ladite période de repos (RP), en particulier dans lequel le dispositif de commande (120) calcule les coûts énergétiques pour chaque période de recharge virtuelle (VRCP) en fonction du prix de l'énergie dans lesdits intervalles de temps de tarification (PTI) utilisée pour charger ladite unité de stockage d'énergie (58) pendant ladite période de recharge virtuelle (VRCP) respective et sélectionne la période de recharge virtuelle (VRCP) avec les coûts les plus faibles comme période de recharge (RCP) à utiliser.

12. Méthode de fonctionnement d'un système de réfrigération de transport, en particulier d'une unité de stockage (10), comprenant un volume de stockage (14) de marchandises sensibles à la température (16) et un circuit de réfrigérant (40) pour refroidir ledit volume de stockage (14), ledit circuit de réfrigérant (40) comprenant un agencement de compresseur (54) entraîné par un moteur électrique (132) et une unité de stockage d'énergie (58) pour fournir de l'énergie afin de faire fonctionner ledit circuit de réfrigérant (40),
dans laquelle ledit système de réfrigération de transport est utilisé pendant une période de déplacement (TP) pour charger et livrer lesdites marchandises (16) et, pendant ladite période de déplacement (TP), ledit circuit de réfrigérant (40) est alimenté par ladite unité de stockage d'énergie (58) afin de faire fonctionner ledit circuit de réfrigérant (40) pour maintenir une température de consigne (ST) à l'intérieur dudit volume de stockage (14), dans laquelle ledit système de réfrigération de transport (10) reste stationnaire pendant une période de repos (RP) dans un emplacement de charge
dans laquelle
dans ledit emplacement de charge, ledit circuit de réfrigérant (40) est connecté à et alimenté par un chargeur (200) connecté à un réseau électrique local pour prérefroidir ledit volume de stockage (14) à une température de consigne (ST) et pour maintenir ladite température de consigne (ST) jusqu'à la fin de la période de repos (RP) et pour charger ladite unité de stockage d'énergie (58) pour la période de déplacement (TP) suivante et un dispositif de commande (120) détermine le niveau de charge de ladite unité de stockage d'énergie (58) et calcule l'énergie de recharge requise (ERC) et détermine en outre la température du volume de stockage (14) et calcule l'énergie de prérefroidissement requise (EPC) et l'énergie de consigne de maintien requise (EKSP)
**caractérisée**
**en ce que** ledit dispositif de commande (120) utilise une corrélation prix/temps (PTC) donnée pour l'énergie électrique consommée au cours de la période de repos (RP) restante pour une synchronisation optimisée en termes de prix d'une période de recharge (RP) pour fournir l'énergie de recharge requise (ERC) et une synchronisation d'une période de prérefroidissement (PCP) pour fournir l'énergie de prérefroidissement requise (EPC) et une synchronisation d'une période de consigne de maintien (KSP) pour fournir l'énergie de consigne de maintien requise (EKSP).

13. Méthode selon la revendication 12, dans laquelle la corrélation prix/temps (PTC) définit un prix pour l'énergie consommée à l'instant (t) respectif au cours de la période de repos (RP).

14. Méthode selon la revendication 12 ou 13, dans laquelle ladite énergie de prérefroidissement (EPC) est calculée par ledit dispositif de commande (120) en fonction de la différence entre une température réelle détectée à l'intérieur du volume de stockage (14) et la température de consigne (ST) donnée pour la période de déplacement (TP) à venir et un facteur de prérefroidissement (PF) associé audit volume de stockage (14).

15. Méthode selon l'une des revendications 12 à 14, dans laquelle ledit dispositif de commande (120) sur la base de l'énergie de prérefroidissement (EPC) calculée et de la consommation électrique dudit circuit de réfrigérant (40), lorsqu'il est exploité pour le prérefroidissement, calcule la durée minimale d'une période de prérefroidissement virtuel (PPCP) nécessaire au fonctionnement dudit circuit de réfrigérant (40) afin d'atteindre la température de consigne (ST) à l'intérieur dudit volume de stockage (14), en particulier dans laquelle le dispositif de commande (120) agence une pluralité desdites périodes de prérefroidissement virtuel (VPCP) commençant à différents instants au cours de ladite période de repos (RP), en particulier dans laquelle la pluralité de périodes de prérefroidissement virtuel (VPCP) au cours de ladite période de repos (RP) comprend des périodes de prérefroidissement virtuel (VACP) agencées dans une séquence temporelle de périodes de prérefroidissement virtuel (VCPCP) se chevauchant ou non.

16. Méthode selon l'une des revendications 12 à 15, dans laquelle le dispositif de commande (120) calcule les coûts énergétiques de prérefroidissement virtuel pour chacune des périodes de prérefroidissement virtuel (VPCP) sur la base du prix défini par la corrélation prix/temps (PTC) pour les périodes de prérefroidissement virtuel (VPCP) respectives.

17. Méthode selon l'une des revendications 12 à 16, dans laquelle ledit dispositif de commande (120) associe à chacune des périodes de prérefroidissement virtuel (VPCP) au cours de ladite période de repos (RP) une période de consigne de maintien virtuel (VKSP) correspondante s'étendant de la fin de la période de prérefroidissement virtuel (VPCP) respective à la fin de ladite période de repos (RP), en particulier dans laquelle le dispositif de commande (120) détermine l'énergie de consigne de maintien virtuel (VEKS) pour chacune des périodes de consigne de maintien virtuel (VKSP) associée à une période de prérefroidissement virtuel (VPCP) respective sur la base d'un facteur de consigne de maintien (KSF) pour les températures de consigne (ST) respectives et de la durée de la période de consigne de maintien virtuel (VKSP) respective, en particulier dans laquelle le dispositif de commande (120) calcule les coûts énergétiques de consigne de maintien virtuel pour chacune des périodes de consigne de maintien virtuel (VKSP) et du prix défini par la corrélation prix/temps (PTC) pour les périodes de consigne de maintien virtuel (VKSP) respectives.

18. Méthode selon la revendication 17, dans laquelle le dispositif de commande (120) calcule les coûts énergétiques totaux pour chaque période de prérefroidissement virtuel (VPCP) et la période de consigne de maintien virtuel (VKSP) associée et sélectionne parmi les périodes de prérefroidissement virtuel (VPCP) et les périodes de consigne de maintien virtuel (VKSP) associées la combinaison avec les coûts énergétiques totaux les plus faibles comme période de prérefroidissement (PCP) et période de consigne de maintien (KSP) associée à utiliser.

19. Méthode selon l'une des revendications 12 à 18, dans laquelle la corrélation prix/temps (PTC) comprend des intervalles de temps de tarification (PTI) ultérieurs agencés au cours de la période de repos (RP) dans chaque intervalle de temps de tarification (PTI), un prix constant pour l'énergie électrique est défini, en particulier dans laquelle les intervalles de temps de tarification (PTI) ont une durée supérieure à quelques minutes et inférieure à quelques heures, et/ou dans laquelle en particulier les intervalles de temps de tarification (PTI) ont une durée identique, en particulier dans laquelle ledit dispositif de commande (120), sur la base de l'énergie de prérefroidissement (EPC) calculée et de la consommation électrique dudit circuit de réfrigérant (40), lorsqu'il est exploité pour le prérefroidissement, détermine le nombre minimal d'intervalles de temps de tarification (PTI) nécessaires pour une période de prérefroidissement virtuel (VPCP) nécessaire au fonctionnement dudit circuit de réfrigérant (40) afin d'atteindre la température de consigne (ST), en particulier dans laquelle ledit dispositif de commande (120) calcule les coûts de l'énergie de prérefroidissement virtuel (VEPC) sur la base des coûts associés aux intervalles de temps de tarification (PTI) respectifs incorporés par ladite période de prérefroidissement virtuel (VPCP), et/ou dans laquelle en particulier le dispositif de commande (120) associe à chacune des périodes de prérefroidissement virtuel (VPCP) au cours de ladite période de repos (RP) une période de consigne de maintien virtuel (VKSP) correspondante comprenant les intervalles de temps de tarification (PTI) entre la fin de la période de prérefroidissement virtuel (VPCP) respective et la fin de ladite période de repos (RP), en particulier dans laquelle ledit dispositif de commande (120) calcule les coûts de consigne de maintien virtuel associés auxdites périodes de prérefroidissement virtuel (VPCP) respectives sur la base de la tarification de l'énergie dans lesdits intervalles de temps de tarification (PTI) compris par ladite période de consigne de maintien virtuel (VKSP), et/ou dans laquelle en particulier le dispositif de commande (120) calcule les coûts énergétiques totaux pour chaque période de prérefroidissement virtuel (VPCP) et la période de consigne de maintien virtuel (VKSP) associée et sélectionne parmi les périodes de prérefroidissement virtuel (VPCP) et la période de consigne de maintien virtuel (VKSP) associée la combinaison avec les coûts énergétiques totaux les plus faibles comme période de prérefroidissement (PCP) et période de consigne de maintien (KSP) associée à utiliser.

20. Méthode selon l'une des revendications 12 à 19, dans laquelle le dispositif de commande (120) calcule l'énergie de recharge (ERC) sur la base de la différence d'énergie entre l'étape de charge de l'unité de stockage d'énergie (58) et une étape de charge prédéfinie de l'unité de stockage d'énergie (58), en particulier dans laquelle ladite étape de charge prédéfinie de ladite unité de stockage d'énergie (58) peut être une étape de charge complète de ladite unité de stockage d'énergie (58) ou une étape de charge partielle de ladite unité de stockage d'énergie (58) fournissant une énergie suffisante pour faire fonctionner ledit circuit de réfrigérant (40) afin de maintenir ladite température de consigne (ST), en particulier dans laquelle ladite étape de charge prédéfinie est sélectionnée par un opérateur ou le dispositif de commande (120), en particulier dans laquelle l'étape de charge prédéfinie est prédite sur la base de paramètres de la période de déplacement (TP) à venir, en particulier dans laquelle les paramètres de la période de déplacement (TP) à venir sont au moins l'un parmi la durée de ladite période de déplacement (TP) et des paramètres de chauffage du logement isolé (12) qui comprennent par exemple des conditions d'air ambiant ou des périodes de temps de déchargement ou de chargement des marchandises (16).

21. Méthode selon la revendication 20, dans laquelle le dispositif de commande (120) détermine l'étape de charge de l'unité de stockage d'énergie (58) en détectant l'énergie consommée pendant chaque période de déplacement (TP), en particulier dans laquelle le dispositif de commande (120) détermine l'énergie consommée pendant la période de déplacement au moyen d'un compteur coulométrique (196).

22. Méthode selon l'une des revendications 20 ou 21, dans laquelle le dispositif de commande (120) détermine une période de recharge virtuelle (VRCP) au cours de ladite période de repos (RP) en soustrayant de la puissance maximale disponible du chargeur (200) la puissance de prérefroidissement et la puissance de consigne de maintien associée à consommer au cours de la période de prérefroidissement (PCP) et de la période de consigne de maintien (KSP) pour déterminer la puissance de recharge disponible et, sur la base de l'énergie de recharge (ERC) et de la puissance de recharge disponible, le dispositif de commande (120) calcule la durée minimale d'une période de recharge virtuelle (VRCP) nécessaire pour charger complètement l'unité de stockage d'énergie (58), en particulier dans laquelle le dispositif de commande (120) agence une pluralité de périodes de recharge virtuelle (VRCP) au cours de ladite période de repos (RP), en particulier dans laquelle la pluralité desdites périodes de recharge virtuelle (VRCP) au cours de ladite période de repos (RP) comprend des périodes de recharge virtuelle (VRCP) agencées dans une séquence temporelle de périodes de recharge virtuelle (VRCP) se chevauchant ou non.

23. Méthode selon l'une des revendications 12 à 22, dans laquelle ledit dispositif de commande (120) calcule les coûts énergétiques pour chaque période de recharge virtuelle (VRCP) en fonction du prix de l'énergie à consommer au cours de ladite période de recharge virtuelle (VRCP) respective sur la base de la corrélation prix/temps (PTC) stockée et sélectionne la période de recharge virtuelle (VRCP) avec les coûts les plus faibles comme période de recharge (RCP) à utiliser.

24. Méthode selon l'une des revendications 20 à 23, dans laquelle le dispositif de commande (120) détermine une période de recharge virtuelle (VRCP) en sélectionnant les intervalles de temps de tarification minimum (PCI) qui sont nécessaires pour charger complètement l'unité de stockage d'énergie (58) au cours de ladite période de repos (RP), en particulier dans laquelle le dispositif de commande (120) calcule les coûts énergétiques pour chaque période de recharge virtuelle (VRCP) en fonction du prix de l'énergie dans lesdits intervalles de temps de tarification (PTI) utilisée pour charger ladite unité de stockage d'énergie (58) pendant ladite période de recharge virtuelle (VRCP) respective et sélectionne la période de recharge virtuelle (VRCP) avec les coûts les plus faibles comme période de recharge (RCP) à utiliser.
